(19) **Europäisches Patentamt / European Patent Office / Office européen des brevets**

(11) **EP 3 388 252 B1**

(12) **FASCICULE DE BREVET EUROPEEN**

(45) Date de publication et mention
de la délivrance du brevet:
**08.07.2020 Bulletin 2020/28**

(51) Int Cl.:
**B60B 27/02** *(2006.01)*  **F16B 7/14** *(2006.01)*
**B62K 25/02** *(2006.01)*  **B62K 19/36** *(2006.01)*

(21) Numéro de dépôt: **18166800.5**

(22) Date de dépôt: **11.04.2018**

(54) **DISPOSITIF DE SERRAGE, NOTAMMENT DE SERRAGE D'UNE SELLE POUR UN CYCLE**

SPANNVORRICHTUNG, INSBESONDERE ZUM FESTZIEHEN EINES SATTELS AUF EINEM FAHRRAD

A CLAMPING DEVICE, IN PARTICULAR FOR CLAMPING A SADDLE FOR A CYCLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.04.2017 FR 1753203**

(43) Date de publication de la demande:
**17.10.2018 Bulletin 2018/42**

(73) Titulaire: **Smoove**
**34980 Saint Gély du Fesc (FR)**

(72) Inventeur: **MERCAT, Denis**
**69110 SAINTE FOY LES LYON (FR)**

(74) Mandataire: **Decobert, Jean-Pascal**
**Cabinet Hautier**
**20, rue de la Liberté**
**06000 Nice (FR)**

(56) Documents cités:
**EP-A1- 2 927 517    EP-A2- 1 968 807**
**EP-A2- 2 505 457    WO-A1-2007/125166**
**US-A- 4 744 690    US-A1- 2006 225 530**

**Description**

La présente invention concerne un dispositif de serrage. Elle concerne en particulier, mais de manière non exclusive, un tel dispositif pour serrer la selle d'un cycle.

Les cycles, notamment les bicyclettes, sont pourvus d'une selle que l'utilisateur souhaite généralement pouvoir régler en hauteur pour des raisons évidentes de confort et de praticité. La selle est portée au sommet d'une tige de selle, qui est elle-même reçue coulissante dans un tube ad hoc du cadre du cycle : une fois que la hauteur de la selle par rapport au cadre est réglée, c'est-à-dire une fois que la tige de selle est coulissée dans le tube précité jusqu'à une position souhaitée le long de ce tube, la tige de selle doit être immobilisée par rapport au tube. Pour ce faire, il est connu d'utiliser un dispositif de serrage, qui est actionné manuellement par l'utilisateur et qui serre le tube sur la tige de selle pour l'immobiliser.

L'invention s'intéresse aux dispositifs de serrage comprenant, d'une part, un collier de serrage, qui entoure coaxialement le tube précité et qui est ouvert de manière à présenter deux extrémités qui, par déformation du collier de serrage, se rapprochent l'une de l'autre afin d'enserrer le tube, et, d'autre part, un levier, qui est monté basculant sur les extrémités du collier de serrage autour d'un axe de basculement perpendiculaire à un axe central du collier de serrage. EP 2 927 517 divulgue les caractéristiques du préambule de la revendication 1. Ce levier est connecté au collier de serrage par un système à came, actionnable par basculement du levier autour de l'axe de basculement entre une position ouverte, dans laquelle le collier de serrage est desserré, et une position fermée, dans laquelle le collier de serrage est serré. WO 2012/066215 et EP 2 927 517 divulguent des dispositifs de serrage de ce type : dans WO 2012/066215, chaque extrémité du collier de serrage délimite une surface de came hélicoïdale contre laquelle est directement appuyée une surface de contre-came hélicoïdale, délimitée par l'extrémité d'un bras correspondant du levier ; dans EP 2 927 517, une rondelle de glissement en matériau à faible coefficient de friction est interposée entre des surfaces de came et de contre-came hélicoïdales qui sont similaires à celles de WO 2012/066215. Dans les deux cas, chaque surface de came et la surface de contre-came qui lui est associée sont :

- à pas constant, c'est-à-dire que ces surfaces s'enroulent autour de l'axe de basculement avec un pas qui ne varie pas autour de cet axe, et
- prévues chacune avec des rayons, respectivement intérieur et extérieur, qui sont constants, c'est-à-dire qui ne varient pas autour de l'axe de basculement.

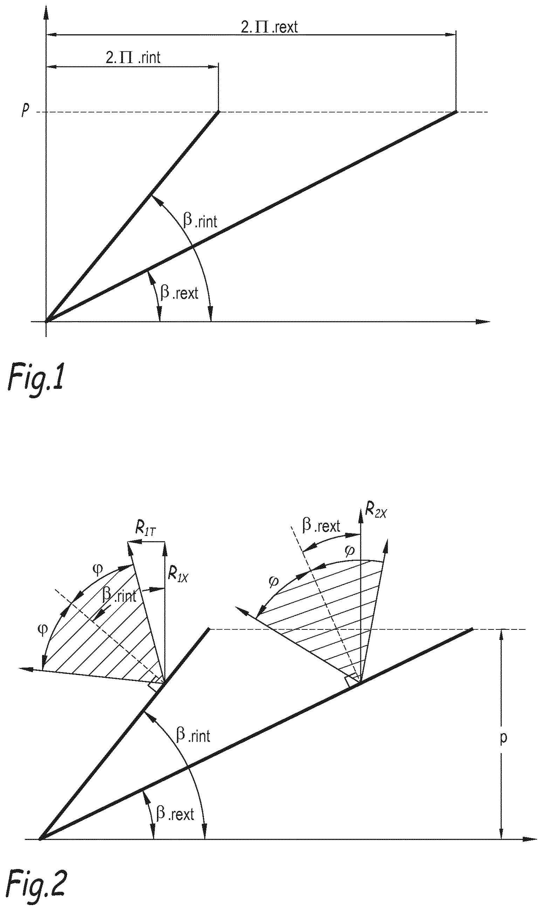

Cette solution n'est pas satisfaisante, pour les raisons expliquées ci-après en regard des figures 1 à 5.

Une surface de came qui est hélicoïdale à pas constant se caractérise par le fait que sa course axiale, c'est-à-dire sa course selon l'axe de basculement défini plus haut, varie proportionnellement avec la course angulaire de cette surface, c'est-à-dire sa course autour de l'axe de basculement. Cela revient à dire que la course axiale et la course angulaire de cette surface de came hélicoïdale sont liées par une fonction linéaire. Bien entendu, dès lors que la surface hélicoïdale fait un tour complet sur elle-même autour de l'axe de basculement, autrement dit qu'elle réalise une course angulaire de 360°, un point donné de cette surface hélicoïdale se déplace axialement d'une course valant le pas de la surface. Ceci étant, le trajet effectif de ce point, qui a la forme d'une hélice circulaire centrée sur l'axe de basculement, présente une longueur qui est dépendante de l'éloignement de ce point vis-à-vis de l'axe de basculement : lorsque ce point est situé à une distance de l'axe de basculement valant le rayon extérieur, noté rext, de la surface hélicoïdale mesuré par rapport à l'axe de basculement et que ce rayon rext est constant sur toute l'étendue de la surface hélicoïdale autour de l'axe de basculement, ce point parcourt une hélice circulaire qui forme le contour extérieur de la surface hélicoïdale et qui présente une longueur de $2.\pi.rext$ et un angle d'hélice noté $\beta_{rext}$ ; mais lorsque ce point est situé à une distance de l'axe de basculement valant le rayon intérieur, noté rint, de la surface hélicoïdale mesuré par rapport à l'axe de basculement et que ce rayon rint est constant sur toute l'étendue de la surface hélicoïdale autour de l'axe de basculement, ce point parcourt une hélice circulaire qui forme le pourtour intérieur de la surface hélicoïdale et qui présente une longueur de $2.\pi.rint$ et un angle d'hélice noté $\beta_{rint}$. La figure 1 illustre ainsi la fonction linéaire liant la course axiale et la course angulaire de la surface hélicoïdale, selon l'hélice considérée de cette surface hélicoïdale. On comprend en particulier que la valeur du pas de la surface hélicoïdale, notée p, et une hélice appartenant à cette dernière, ayant un rayon, noté r et mesuré par rapport à l'axe de basculement précité, et un angle d'hélice, noté $\beta_r$ et mesuré par rapport à un plan perpendiculaire à l'axe de basculement, sont liées par la relation

$$(1)\ \beta_r = \arctan(p/(2.\pi.r)).$$

La fonction arc tangente (arctan) étant strictement croissante, on comprend que, sur la base de cette relation (1), l'angle d'hélice $\beta_r$ augmente avec le pas p et décroît avec le rayon r, l'angle d'hélice et le rayon étant indépendants l'un de l'autre.

Par ailleurs, le phénomène de frottement entre deux pièces, notamment entre une surface de came et une surface de contre-came hélicoïdales, fait qu'il n'y a pas de glissement si la force résultante est comprise dans un cône dit de frottement, qui correspond à un cône de révolution, qui a pour axe la normale au contact entre la surface de came et la surface de contre-came et dont le demi-angle au sommet a pour valeur $\varphi$ correspondant à l'arc tangente du coefficient de frottement du couple de matériaux composant respectivement la surface de came et la surface de contre-came. Si l'angle de la force résultante est à l'extérieur ou à l'intérieur du cône de frottement, les pièces commencent à glisser entre elles ou non. La figure 2 illustre ces deux situations. Dans la partie gauche de la figure 2, est représentée la développée linéaire du pourtour intérieur d'une surface de came hélicoïdale à pas constant, ce pourtour intérieur étant associé à un rayon rint et à un angle d'hélice $\beta_{rint}$, comme évoqué plus haut. Dans la partie droite de la figure 2, est représentée la développée linéaire du pourtour extérieur de la même surface de came hélicoïdale à pas constant, ce pourtour extérieur étant associé à un rayon rext et à un angle d'hélice $\beta_{rext}$, également comme évoqué précédemment. Lorsqu'on souhaite appliquer un effort axial au travers de ce couple de surface de came et de surface de contre-came hélicoïdales, autrement dit un effort orienté parallèlement à l'axe de basculement précité, un fonctionnement différent est constaté pour le pourtour intérieur de la surface de came, représenté à gauche, et pour le pourtour extérieur de cette surface de came, représenté à droite :

- sur le pourtour intérieur, on constate que la composante axiale de l'effort, notée $R_{1X}$ n'entre pas dans le cône de frottement hachuré sur la figure 2, ce qui est lié au fait que l'angle d'hélice $\beta_{rint}$, est supérieur à $\varphi$ ; la transmission de l'effort génère alors une composante tangente $R_{1T}$ provoquant le glissement entre elles de la surface de came et de la surface de contre-came ; la coopération entre la surface de came et la surface de contre-came, au niveau d'un petit rayon, est donc instable et réversible, de sorte qu'une poussée axiale entraîne une rotation entre la surface de came et la surface de contre-came ;

- sur le pourtour extérieur, on constate que la composante axiale de l'effort, notée $R_{2X}$, est située à l'intérieur du cône de frottement hachuré sur la figure 2, ce qui est lié au fait que l'angle d'hélice $\beta_{rext}$ est inférieur à $\varphi$ ; ainsi, la transmission de l'effort n'engendre aucun glissement entre la surface de came et la surface de contre-came ; la coopération entre la surface de came et la surface de contre-came au niveau d'un grand rayon est donc stable et irréversible, si bien qu'une poussée axiale n'entraîne pas une rotation entre la surface de came et la surface de contre-came.

En pratique, pour caractériser le fonctionnement d'un tel système, on peut considérer que la surface de came se comporte globalement comme au niveau d'une hélice intermédiaire de cette surface de came, cette hélice intermédiaire étant située entre son pourtour intérieur et son pourtour extérieur. Lorsque la pression exercée au travers de la surface de came est constante, on démontre que le rayon de l'hélice intermédiaire, que l'on peut qualifier de rayon équivalent, noté req, se détermine par la relation suivante :

$$(2)\ req = 2/3.(rext^3 - rint^3)/(rext^2 - rint^2).$$

On comprend donc qu'une surface de came hélicoïdale, à pas constant et avec pourtours intérieur et extérieur à rayons respectifs constants, présente un comportement assez incertain, dans le sens où il n'est pas certain que la pression de contact au travers de cette surface de came sera effectivement constante et appliquée sur l'hélice intermédiaire associée au rayon calculé selon la relation (2), étant souligné que l'usure et les tolérances de fabrication, entre autres, impactent la situation.

Il en résulte dans le dispositif de WO 2012/066215 un manque de stabilité du levier en position ouverte, ainsi qu'un manque de stabilité du levier en position fermée. Pour compenser partiellement ce manque de stabilité, la rondelle de glissement utilisée dans EP 2 927 517 prétend stabiliser le levier en position fermée, mais accentue le manque de stabilité en position ouverte.

Pour contourner la problématique de stabilité décrite jusqu'ici, on pourrait imaginer de réduire la valeur du pas de la ou des surfaces de came utilisées dans les dispositifs de WO 2012/066215 et EP 2 927 517, mais cela impacte directement la course axiale maximale qu'autorisent, pour une course angulaire donnée, cette ou ces surfaces de came pour que le dispositif serre le tube autour de la tige de selle. Dès que cette course axiale maximale est trop petite, on aboutit à ce que :

- même avec le levier en position ouverte, une contrainte de serrage substantielle risque d'être appliquée par le collier de serrage autour du tube, si bien qu'il est difficile pour l'utilisateur de lever ou descendre la tige de selle, que l'intérieur du tube raye la tige de selle en endommageant l'anodisation ou la peinture de cette tige, et qu'il y a même un risque de grippage et/ou d'usure de la tige de selle dans le tube ; et

- même avec le levier en position fermée, le dispositif risque de ne pas assez serrer le tube, le poids de l'utilisateur pouvant être suffisant pour entraîner la tige de selle à l'intérieur du tube malgré le serrage de ce dernier si bien qu'en service, la selle descend ou pivote, ce qui en use la tige et ce qui est particulièrement inconfortable pour le cycliste.

Aux considérations techniques qui précèdent, s'ajoute un autre aspect critique pour ce type de dispositif de serrage, à savoir, d'une part, son comportement dynamique, à savoir en serrage et en desserrage c'est-à-dire lorsque le levier passe, respectivement, de sa position ouverte à sa position fermée et de sa position fermée à sa position ouverte, et, d'autre part, son comportement statique.

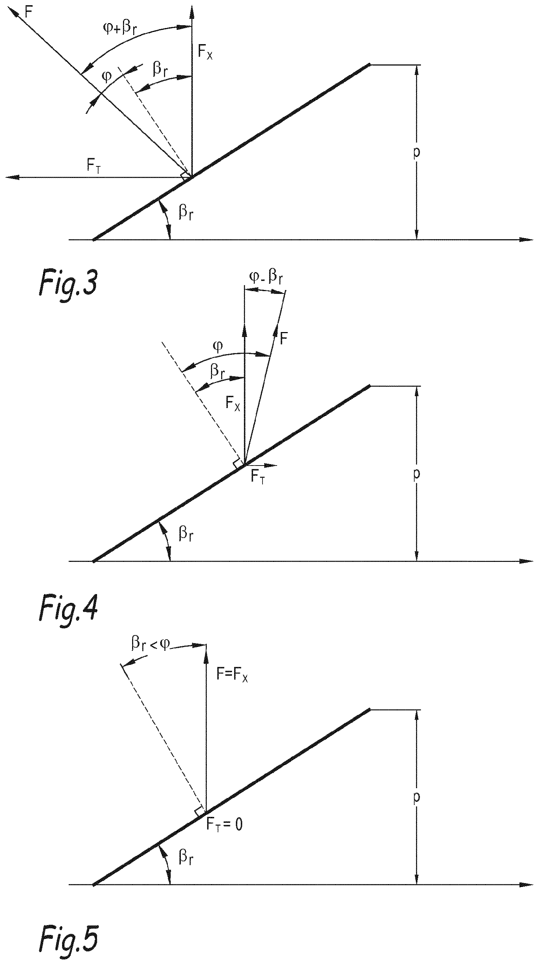

Le fonctionnement en serrage d'une surface de came hélicoïdale à pas constant et avec pourtours intérieur et extérieur à rayons respectifs constants est illustré par la figure 3 en considérant que la came est entraînée en rotation autour de l'axe de basculement de manière que soit appliqué à la came un effort de serrage F qui se décompose en :

- une composante d'effort axiale $F_X$ selon l'axe de basculement précité, et
- une composante d'effort tangente $F_T$ orthoradiale à l'axe de basculement.

En tenant compte de $\varphi$ défini plus haut, l'angle d'hélice $\beta_r$ et le rayon r d'une hélice donnée de la surface de came, hélice où est appliqué l'effort F, sont liés par les relations :

$$(3) \ \tan(\varphi+\beta_r) = F_T/F_X,$$

$$(4) \ C = F_T.r = F_X.r.\tan(\varphi+\beta_r),$$

et

$$(5) \ \eta = 100.\tan(\beta_r)/\tan(\beta_r+\varphi),$$

C étant le couple que doit produire l'utilisateur pour générer l'effort de serrage et $\eta$ étant le rendement, en pourcents, du serrage correspondant.

Le fonctionnement en desserrage de cette surface de came hélicoïdale à pas constant et avec pourtours intérieur et extérieur à rayons respectifs constants est illustré par la figure 4, en considérant que la came est entraînée en rotation autour de l'axe de basculement de manière que soit appliqué à la came un effort de desserrage F qui, de la même manière que précédemment, se décompose en une composante axiale $F_X$ et une composante tangente $F_T$. L'angle d'hélice $\beta_r$ et le rayon r d'une hélice donnée de la surface hélicoïdale, hélice où est appliqué l'effort F, sont liés par les relations :

$$(6) \ \tan(\varphi-\beta_r) = F_T/F_X,$$

et

$$(7) \ C = -F_T.r = - F_X.r.\tan(\varphi- \beta_r),$$

C étant le couple que doit produire l'utilisateur pour générer l'effort de desserrage F.

Le fonctionnement en statique de la surface de came hélicoïdale à pas constant et avec pourtours intérieur et extérieur à rayons respectifs constants est illustré par la figure 5 : la came est immobile, en particulier non entraînée en rotation autour de l'axe de basculement, de manière à générer un effort F se limitant à une composante axiale $F_X$, sa composante tangente $F_T$ étant nulle. Bien entendu, la surface de came est ainsi bloquée vis-à-vis de la surface de contre-came sous réserve que $\varphi$ soit supérieur à l'angle d'hélice $\beta_r$ pour toutes ou, à tout le moins, presque toutes les hélices formant la surface de came.

Les diverses considérations qui précèdent illustrent la complexité de concevoir un dispositif de serrage du type évoqué plus haut, en particulier lorsque ce dispositif est destiné à être utilisé dans un cadre particulièrement exigeant, notamment celui des cycles en libre-service. En effet, la hauteur de selle d'un cycle en libre-service doit pouvoir être réglée de manière simple et intuitive, en ne nécessitant que peu d'effort de la part de l'utilisateur, tout en garantissant un blocage efficace, et ce de manière pérenne, c'est-à-dire en résistant à la fois à un usage intensif, de par exemple plusieurs dizaines de réglages par jour, et à une exposition aux intempéries et au vandalisme.

De son côté, WO 2007/075735 divulgue un mécanisme de verrouillage permettant de verrouiller de manière réversible un arbre de roue de cycle sur le cadre d'un cycle. Ce mécanisme de verrouillage comprend un système à came comportant trois paires associant chacune une surface de came et une surface de contre-came, qui sont respectivement portées par des pièces du mécanisme, déplaçables en rotation l'une par rapport à l'autre autour d'un axe centré sur l'arbre de la roue de cycle. La surface de came de chacune des trois paires précitées est globalement hélicoïdale, en présentant un pas qui varie continûment autour de l'axe sur toute l'étendue fonctionnelle de la surface de came, tandis que la surface de contre-came associée se présente sous la forme d'un ergot cylindrique qui est appuyé axialement contre la surface de came. L'appui du bout cylindrique de ces ergots, qui présente un petit rayon de courbure, contre la surface de came à pas continûment variable engendre une pression de contact très élevée, en particulier lorsque les pièces précitées du mécanisme occupent une position angulaire relative dans laquelle le mécanisme est destiné à retenir l'arbre de roue sur le cadre du cycle : les pièces précitées du mécanisme sont soumises à une charge permanente extrêmement élevée, en particulier lorsque le mécanisme retient l'arbre de roue sur le cadre du cycle, ce qui oblige à ce que ces pièces soient réalisées en métal dur, typiquement en acier, pour éviter leur fluage. Cependant, l'utilisation de métal induit des inconvénients pratiques, liés au poids et au coût des pièces métalliques, ainsi qu'à la nécessité de prévoir un traitement des pièces pour en augmenter la dureté et/ou une lubrification pour limiter les problèmes de grippage, d'usure et de corrosion par frottement.

Le but de la présente invention est donc d'améliorer les dispositifs de serrage du type décrit jusqu'ici, notamment en vue de leur utilisation sur des cycles en libre-service.

A cet effet, l'invention a pour objet un dispositif de serrage, notamment de serrage d'une selle pour un cycle, tel que défini à la revendication 1.

Grâce à la variation de l'angle d'hélice de l'hélice d'appui définie par la ou chaque surface de came du dispositif de serrage, l'invention permet que :

- lorsque le levier est en position fermée, la coopération entre la ou chaque surface de came et la surface de contre-came associée est stable, tout en produisant une composante d'effort axiale importante,
- lorsque le levier est en position ouverte, la coopération entre la ou chaque surface de came et la surface de contre-came associée est réversible, ce qui maintient le levier en position ouverte malgré l'effet du poids propre du levier tendant à le faire basculer vers la position fermée, et
- lorsque le levier est basculé de sa position ouverte à sa position fermée par entraînement de l'utilisateur, ce dernier n'a à appliquer qu'un couple limité grâce à un bon rendement local de la surface de came.

Par ailleurs, on notera que l'invention va ainsi à l'encontre du préjugé selon lequel, dès lors qu'une surface de came hélicoïdale est réalisée dans un matériau susceptible de fluer et donc de conduire à une diminution progressive dans le temps de l'intensité du serrage produit par le dispositif, seule une interface d'appui congruente entre la surface de came et la surface de contre-came est envisageable sur toute la course angulaire relative entre ces surfaces, ce qui conduit nécessairement à ce que la surface de came et la surface de contre-came aient des pas constants et de même valeur absolue sur toute leur étendue fonctionnelle. Grâce à la variation de l'angle d'hélice de l'hélice d'appui de la ou chaque surface de came, l'invention permet que lors du serrage et du desserrage du dispositif, la pression de contact entre la ou chaque surface de came et la surface de contre-came est certes élevée, mais cette pression élevée ne survient que pendant une durée très courte correspondant aux phases transitoires de passage du levier entre ses positions ouverte et fermée, sans risque de fluage pour la matière constituant la ou les surfaces de came. En outre, lors de ces phases transitoires, la course de serrage axiale est encore faible de sorte que l'effort axial généré est encore loin d'atteindre le maximum obtenu en fin de course lors du serrage. Lorsque le levier passe de la position ouverte à la position fermée, l'effort axial ne commence à croître rapidement que lorsque la phase transitoire précitée se termine et que le levier atteint la position fermée : les pas respectifs de la surface de came et de la surface de contre-came deviennent alors identiques de sorte que l'interface commune ne va cesser de croitre jusqu'au serrage final pour limiter la pression de contact générée par l'effort axial croissant induit par le serrage. Cette caractéristique de croissance de l'interface de contact est nouvelle et même contraire par rapport à l'art antérieur, notamment par rapport aux documents d'art antérieur évoqués plus haut, dans le sens où dans WO 2012/066215, l'interface de contact ne fait que décroître avec le serrage, et dans WO 2007/075735, l'interface de contact reste sensiblement linéaire et très faible sur toute la course relative entre les pièces rotatives du mécanisme de verrouillage.

Lorsque le levier est en position fermée, le fluage est évité en prévoyant que la portion de la surface de came et la portion de la surface de contre-came, qui sont alors appuyées l'une contre l'autre, sont hélicoïdales et de même pas, ce qui permet de répartir sur une grande interface d'appui l'importante composante d'effort axial produite par la coopération entre la ou chaque surface de came et la surface de contre-came associée. L'invention permet ainsi de réaliser la ou les surfaces de came de son dispositif en une matière thermoplastique, ce qui s'avère à la fois économique, notamment en lien avec la possibilité de produire la ou les surfaces de came par injection, performant pour limiter le coefficient de frottement, et résistant à l'usure, notamment comparativement à des métaux.

En pratique, comme expliqué plus en détail par la suite, l'hélice d'appui, le long de laquelle l'angle d'hélice varie conformément à l'invention, peut être soit réalisée sous forme d'une crête, soit définie géométriquement en lien avec la relation (2) donnée plus haut. Egalement comme expliqué plus en détail par la suite, l'invention prévoit, pour faire varier l'angle d'hélice de cette hélice d'appui, de jouer soit sur une variation du pas de la ou chaque surface de came, soit sur une variation du rayon de l'hélice d'appui, soit sur une combinaison des deux variations précitées.

Des caractéristiques additionnelles avantageuses du dispositif de serrage conforme à l'invention sont spécifiées aux revendications dépendantes.

L'invention sera mieux comprise à la lecture de la description qui va suivre, donnée uniquement à titre d'exemple et faite en se référant aux dessins sur lesquels :

- les figures 1 à 5 sont des graphes schématiques qui ont été décrits précédemment, en lien avec une surface de came hélicoïdale à pas constant,
- les figures 6 à 8 sont des perspectives, sous des angles de vue respectifs qui sont différents, d'un éclaté d'un dispositif de serrage conforme à l'invention, un levier de ce dispositif étant en position fermée ;
- la figure 9 est une vue en perspective d'une pièce de came, montrée seule, appartenant au dispositif de serrage des figures 6 à 8 ;
- la figure 10 est une vue en élévation selon la flèche X de la figure 9 ;
- la figure 11 est une vue en perspective du dispositif de serrage des figures 6 à 8, montré à l'état assemblé et alors que le levier de ce dispositif est en position ouverte ;

- la figure 12 est une vue en élévation selon la flèche XII de la figure 11 ;
- la figure 13 est une coupe selon la ligne XIII-XIII de la figure 12 ;
- la figure 14 est une vue similaire à la figure 12, illustrant le dispositif de serrage avec son levier en position fermée ;
- les figures 15 et 16 sont des coupes selon respectivement les lignes XV-XV et XVI-XVI de la figure 14 ;
- la figure 17 est une coupe selon la ligne XVII-XVII de la figure 16,
- la figure 18 est une coupe selon la ligne XVIII-XVIII de la figure 17,
- la figure 19 est un graphe schématique montrant l'évolution de la course axiale de la pièce de came des figures 9 et 10 en fonction d'une dimension angulaire d'une surface de came de cette pièce de came,
- la figure 20 est un graphe schématique montrant l'évolution du rayon d'une crête de la surface de came précitée en fonction de la dimension angulaire de cette dernière,
- la figure 21 est un graphe schématique montrant l'évolution de l'angle d'hélice de la crête précitée en fonction de la dimension angulaire de la surface de came précitée,
- la figure 22 est un graphe schématique montrant l'évolution du rendement du serrage par la surface de came précitée en fonction de la dimension angulaire de cette dernière,
- la figure 23 est un graphe schématique montrant l'évolution du couple à appliquer au levier du dispositif des figures 6 à 8 pour serrer ce dispositif, et
- la figure 24 est une vue similaire à la figure 23, montrant l'évolution du couple pour desserrer le dispositif.

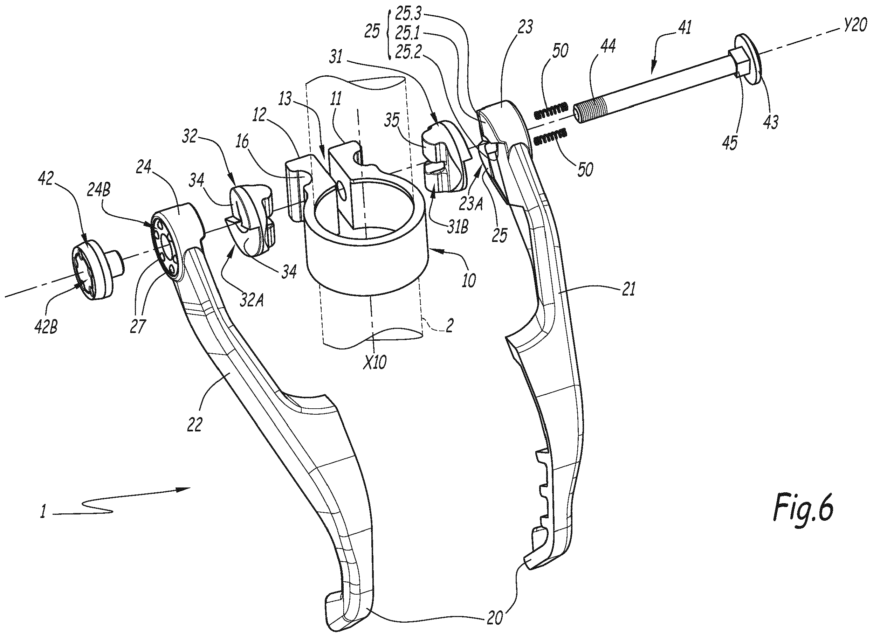

Sur les figures 6 à 18 est représenté un dispositif de serrage 1 permettant de serrer un élément à serrer 2, qui n'est représenté que sur la figure 6, et ce de manière uniquement partielle et schématique, en pointillés. Comme évoqué dans la partie introductive, l'élément à serrer 2 peut notamment être un tube d'un cadre d'un cycle, en particulier d'un cadre d'une bicyclette, à l'intérieur duquel est reçue coaxialement une tige de selle, non représentée, elle-même surmontée d'une selle, également non représentée. A toutes fins utiles, le lecteur pourra se reporter aux documents WO 2012/066215 et EP 2 927 517 pour disposer de détails supplémentaires relatifs à un tel tube de cadre recevant une telle tige de selle, étant rappelé que ces aspects ne sont pas limitatifs de la présente invention.

Comme représenté sur les figures 6 à 8 et 11 à 18, le dispositif de serrage 1 comporte un collier de serrage 10 présentant globalement une forme d'oméga.

Le collier de serrage 10 définit un axe central $X10$ autour duquel s'étend le collier de serrage en définissant, à l'intérieur du collier de serrage, un volume libre, globalement cylindrique et centré sur l'axe $X10$ : en service, l'élément à serrer 2 est placé à l'intérieur du volume libre précité de manière que le collier de serrage entoure de manière sensiblement coaxiale l'élément à serrer 2, comme montré schématiquement sur la figure 6.

Le collier de serrage 10 est ouvert en un point de sa périphérie : le collier de serrage 10 présente ainsi deux extrémités 11 et 12 qui sont séparées l'une de l'autre, dans une direction orthoradiale à l'axe $X10$, par une fente 13. En jouant sur l'ouverture-fermeture de la fente 13, autrement dit en écartant/rapprochant les extrémités 11 et 12 l'une vis-à-vis de l'autre, moyennant la déformation du collier de serrage 10, ce dernier enserre de manière plus ou moins forte l'élément à serrer 2, notamment en vue de bloquer/débloquer la tige de selle évoquée plus haut ou un organe similaire reçu à l'intérieur de l'élément à serrer 2.

Egalement comme bien visible sur les figures 6 à 8 et 11 à 18, le dispositif de serrage 1 comporte un levier 20 qui commande la déformation du collier de serrage 10 en agissant sur les extrémités 11 et 12 de ce dernier. Plus précisément, le levier 20 est monté basculant sur les extrémités 11 et 12 autour d'un axe de basculement $Y20$, qui s'étend de manière sensiblement perpendiculaire à l'axe central $X10$ et décalée par rapport à cet axe central, en passant par les extrémités 11 et 12 du collier de serrage 10. En pratique, comme dans l'exemple de réalisation considéré ici, l'axe de basculement $Y20$ s'étend dans la direction orthoradiale selon laquelle les extrémités 11 et 12 sont séparées par la fente 13.

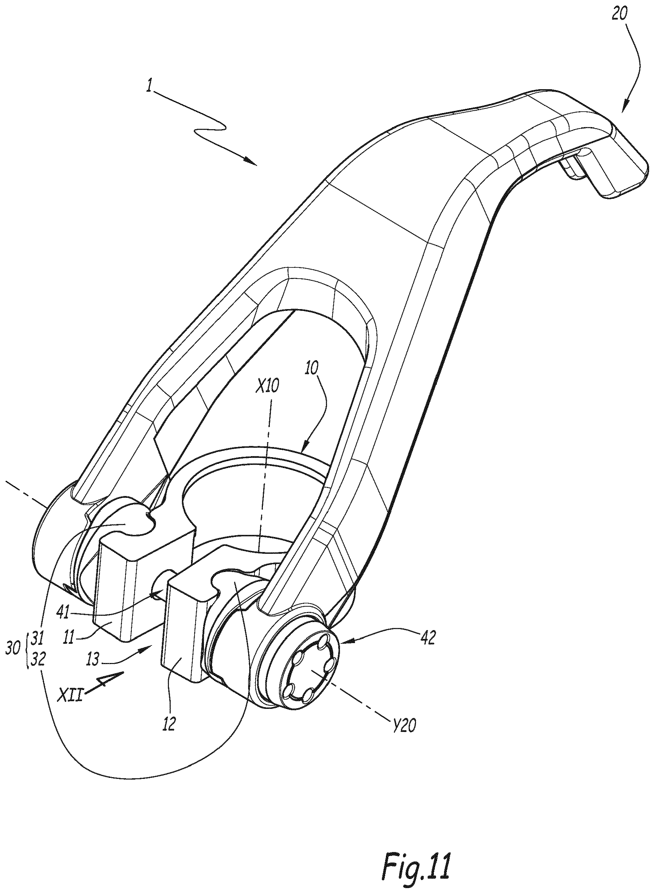

En service, le levier 20 est prévu pour être actionné par un utilisateur moyennant le basculement de ce levier autour de l'axe de basculement $Y20$, et ce dans des sens opposés pour, sélectivement, serrer et desserrer le collier de serrage 10. Ainsi, pour serrer le collier de serrage 10, le levier 20 est basculé d'une position ouverte, montrée sur les figures 11 à 13, à une position fermée, montrée sur les figures 6 à 8 et 14 à 18. La course angulaire, autour de l'axe de basculement $Y20$, du levier 20 entre ces positions ouverte et fermée n'est pas limitative de l'invention, étant entendu qu'elle est typiquement inférieure à 360°, notamment inférieure à 180°, voire sensiblement égale à 90° dans le contexte d'utilisation du dispositif de serrage 1 pour serrer la selle d'un cycle. Dans la suite de la description, ainsi que dans l'exemple de réalisation considéré sur les figures, la course angulaire du levier 20 entre ces positions ouverte et fermée est considérée comme valant 90°.

La forme de réalisation du levier 20 n'est pas limitative du moment que ce levier puisse être manipulé à la main par un utilisateur en vue de le basculer autour de l'axe de basculement $Y20$. En particulier, la géométrie de la forme globale de ce levier 20 n'est pas limitée à celle montrée sur les figures, étant d'ailleurs remarqué que, pour des raisons d'illustration, le levier 20 est dessiné comme étant scindé en deux parties sur les figures 6 à 8, alors qu'il peut être réalisé en une seule pièce, comme bien visible sur les figures 11, 12 et 14.

Dans la forme de réalisation considérée sur les figures, le levier 20 comporte deux bras 21 et 22, qui s'étendent transversalement à l'axe de basculement X20. Ces bras 20, 21 et 22 sont disposés de part et d'autre, dans la direction de l'axe de basculement Y20, du collier de serrage 10, en étant suffisamment distants l'un de l'autre pour permettre au collier de serrage 10 de passer entre ces bras 21 et 22 lors du basculement du levier entre les positions ouverte et fermée. A leur extrémité opposée à l'axe de basculement Y20, les bras 21 et 22 se rejoignent pour former une zone de préhension manuelle. A l'opposé de cette zone de préhension, les bras 21 et 22 présentent respectivement des extrémités 23 et 24, qui sont toutes les deux traversées par l'axe de basculement Y20 et entre lesquelles sont interposées les extrémités 11 et 12 du collier de serrage 10.

Egalement comme montré sur les figures 6 à 8 et 11 à 18, le dispositif de serrage 1 comporte en outre un système à came 30 qui connecte mécaniquement le levier 20 aux extrémités 11 et 12 du collier de serrage 10 et qui agit en translation, selon l'axe de basculement Y20, sur les extrémités 11 et 12 du collier de serrage afin de rapprocher/écarter ces extrémités l'une vis-à-vis de l'autre, lors du basculement du levier 20 autour de l'axe de basculement Y20 entre les positions ouverte et fermée de ce levier. Dans l'exemple de réalisation considéré sur les figures, le système à came 30 inclut deux pièces de came 31 et 32, entre lesquelles sont interposées, selon l'axe de basculement Y20, les extrémités 11 et 12 du collier de serrage 10, la pièce de came 31 étant axialement interposée entre l'extrémité 11 et l'extrémité 23 du levier 20 tandis que la pièce de came 32 est axialement interposée entre l'extrémité 12 et l'extrémité 24 du levier 20. Chacune des pièces de came 31 et 32 est traversée par l'axe de basculement Y20 et délimite, sur sa face 31A, respectivement 32A, tournée vers l'extrémité 23 du levier 20, respectivement l'extrémité 24 du levier 20, au moins une surface de came 33, respectivement 34. Dans l'exemple de réalisation considéré sur les figures, la face 31A, respectivement 32A, de la pièce de came 31, respectivement 32, inclut deux surfaces de came 33, respectivement deux surfaces de came 34, qui se succèdent autour de l'axe de basculement Y20 et qui seront présentées en détail plus loin.

A l'opposé, selon l'axe de basculement Y20, de la face 31A, respectivement 32A, de la pièce de came 31, respectivement 32, cette dernière présente une face 31B tournée vers l'extrémité 11 du collier de serrage 10, respectivement 32B tournée vers l'extrémité 12 du collier de serrage 10. Les faces 31B et 32B sont respectivement en prise avec les extrémités 11 et 12 du collier de serrage 10, de manière à lier en rotation les pièces de came 31 et 32 et les extrémités 11 et 12 du collier de serrage, autour de l'axe de basculement Y20. La forme de réalisation de cette mise en prise n'est pas limitative, de multiples solutions pouvant être envisagées du moment que ces dernières assurent, à la fois, la liaison en rotation autour de l'axe de basculement Y20 entre les pièces de came et les extrémités du collier de serrage, et la transmission de l'entrainement entre les pièces de came et les extrémités du collier de serrage lors du rapprochement et de l'écartement relatifs des extrémités du collier de serrage selon l'axe de basculement Y20.

Ainsi, une première solution, non représentée sur les figures, consiste à lier rigidement les pièces de came 31 et 32 à, respectivement, les extrémités 11 et 12 du collier de serrage 10, et ce par tout moyen approprié, tel que des ergots, de la colle, etc. En variante non représentée de cette première solution, il peut même être envisagé que les pièces de came soient venues de matière avec, respectivement, les extrémités 11 et 12 du collier de serrage, ce qui revient à dire que, contrairement à la forme de réalisation envisagée jusqu'ici, les pièces de came 31 et 32 ne sont pas distinctes du collier de serrage et que les surfaces de came 33 et 34 sont délimitées par des prolongements de matière des extrémités 11 et 12 du collier de serrage.

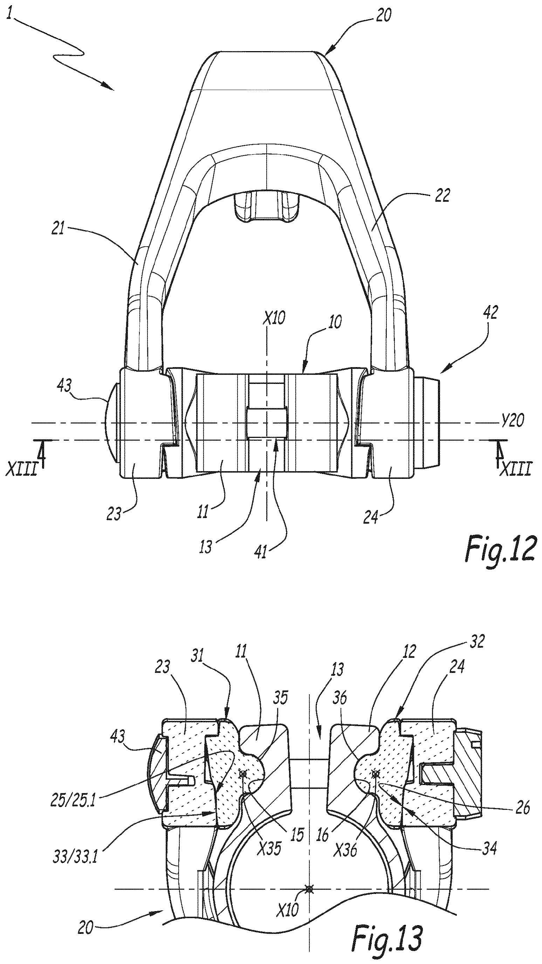

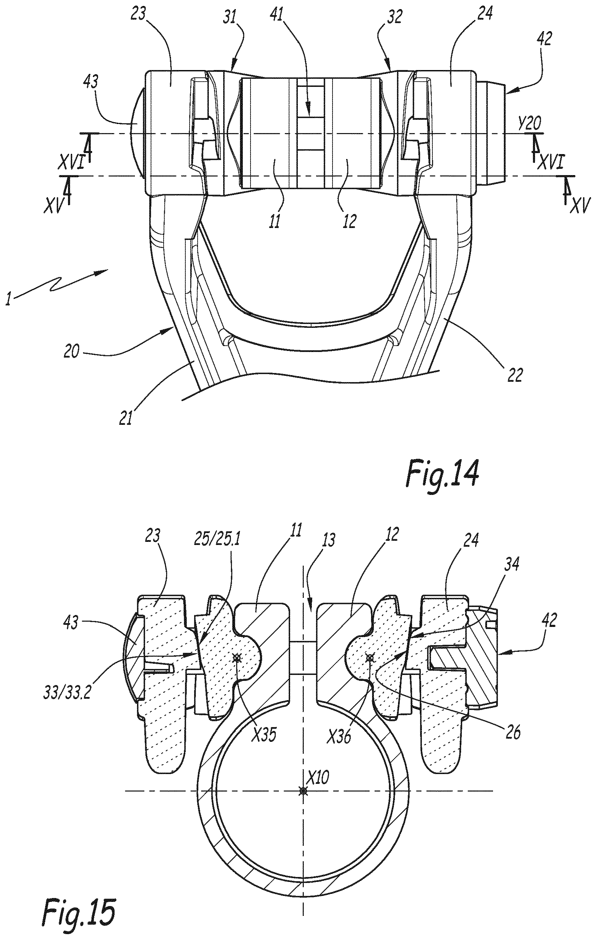

Une autre solution est envisagée pour l'exemple de réalisation considéré sur les figures : la face 31B, respectivement 32B, de la pièce de came 31, respectivement 32, inclut une surface cylindrique 35, respectivement 36, qui est centrée sur un axe de pivotement X35, respectivement X36, qui est à la fois parallèle à l'axe central X10 du collier de serrage 10 et sécant à l'axe de basculement Y20, comme bien visible sur les figures 13 et 15. La surface cylindrique 35, respectivement 36, coopère, par complémentarité de formes, avec une surface cylindrique 15, respectivement 16, délimitée par l'extrémité 11, respectivement 12, du collier de serrage 10, de façon que la pièce de came 31, respectivement 32, soit liée en rotation autour de l'axe de basculement Y20 à l'extrémité 11, respectivement 12, du collier de serrage 10 et soit appuyée selon cet axe de basculement Y20 contre cette extrémité 11, respectivement 12, tout en autorisant un débattement en pivotement autour de l'axe de pivotement X35, respectivement X36, entre la pièce de came 31 et l'extrémité 11, respectivement entre la pièce de came 32 et l'extrémité 12. Dans l'exemple de réalisation considéré sur les figures, les surfaces cylindriques 35 et 36 sont convexes et les surfaces cylindriques 15 et 16 sont concaves, étant entendu qu'à titre de variante non représentée, le sens des courbures de ces surfaces peut être inversé. Dans tous les cas, le débattement en pivotement permet aux pièces de came 31 et 32 d'accommoder le changement d'inclinaison des extrémités 11 et 12 du collier de serrage 10 par rapport à l'axe de basculement Y20 lors du rapprochement/écartement relatif de ces extrémités 11 et 12, sans modifier l'inclinaison correspondante des pièces de came 31 et 32, comme bien visible par comparaison des figures 13 et 15.

En revenant à la description du système à came 30, ce dernier comprend également des surfaces de contre-came 25 et 26, qui sont liées en rotation, autour de l'axe de basculement Y20, au levier 20 et qui, en service, sont appuyées, selon l'axe de basculement Y20, contre les surfaces de came 33 et 34 des pièces de came 31 et 32. Plus précisément, dans l'exemple de réalisation considéré sur les figures, deux surfaces de contre-came 25 sont prévues sur une face 23A de l'extrémité 23 du levier 20, tournée selon l'axe de basculement Y20 vers l'extrémité 11 du collier de serrage 10, et deux surfaces de contre-came 26 sont prévues sur une face 24A de l'extrémité 24 du levier 20, tournée vers l'extrémité 12 du collier de serrage. Pour chacune des faces 23A et 24A, les deux surfaces de contre-came 25, respectivement 26, sont symétriques l'une de l'autre par rapport à l'axe de basculement Y20 et s'étendent chacune sur environ 90° autour de l'axe de basculement Y20, en étant séparées l'une de l'autre par deux régions angulaires, diamétralement opposées, de la face 23A, respectivement 24A, agencées en retrait, selon l'axe de basculement Y20, des surfaces de contre-came 25, respectivement 26. En d'autres termes, les surfaces de contre-came 25, respectivement 26, sont en saillie, selon l'axe de basculement Y20, vis-à-vis des régions angulaires précitées de la face 23A, respectivement 24A.

En pratique, à l'état assemblé du dispositif de serrage 1, les surfaces de contre-came 25 sont symétriques des surfaces de contre-came 26 par rapport à un plan géométrique, perpendiculaire à l'axe de basculement Y20 et contenant l'axe central X10 : par commodité, une seule des surfaces de contre-came 25 va être décrite plus en détail ci-après, l'autre surface de contre-came 25 et les surfaces de contre-came 26 se déduisant par les relations de symétrie indiquées précédemment. Ainsi, en considérant l'une des surfaces de contre-came 25, cette surface de contre-came est, comme bien visible sur la figure, globalement hélicoïdale, en s'enroulant autour de l'axe de basculement Y20, et inclut :

- une partie principale 25.1 correspondant à une surface hélicoïdale, centrée sur l'axe de basculement Y20 et ayant un pas constant, c'est-à-dire un pas dont la valeur, qui est nécessairement non nulle, est constante autour de l'axe de basculement Y20, et
- deux bords opposés 25.2 et 25.3, qui sont reliés l'un à l'autre par la partie principale 25.1 et qui joignent cette partie principale 25.1 à, respectivement, l'une et l'autre des deux régions angulaires en retrait précitées, prévues sur la face 23A du levier 20.

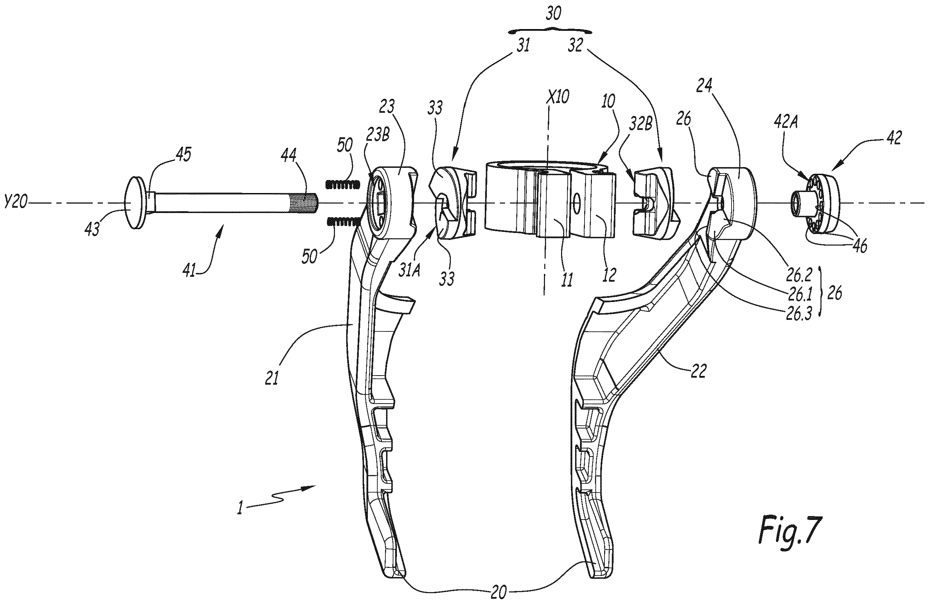

La partie principale 26.1 et les bords opposés 26.2 et 26.3 sont également référencés pour l'une des surfaces de contre-came 26 sur la figure 7.

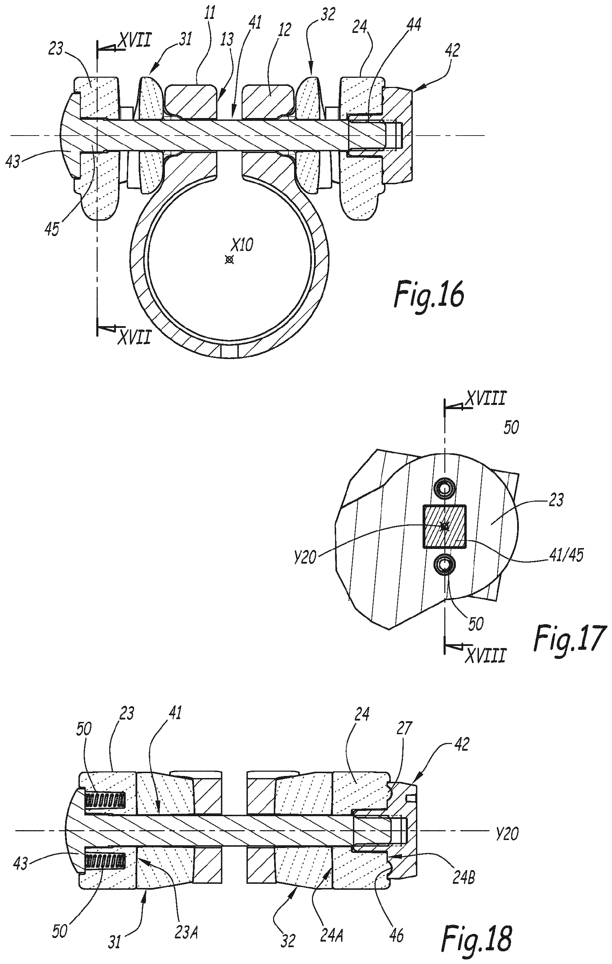

Egalement comme bien visible sur les figures 6 à 8 et 11 à 18, le dispositif de serrage 1 comporte un système de liaison vis-écrou 40 permettant de maintenir les surfaces de came 33 et 34 en appui contre les surfaces de contre-came 25 et 26 dans toutes les positions basculées du levier 20 entre ses positions ouverte et fermée incluses. Dans l'exemple de réalisation considéré sur les figures, ce système de liaison vis-écrou 40 comporte un tourillon 41 et un écrou 42, tous les deux centrés sur l'axe de basculement Y20. Comme bien visible sur les figures 16 à 18, à l'état assemblé du dispositif de serrage 1, le tourillon 41 traverse les deux extrémités 23 et 24 du levier 20. A l'une de ses extrémités axiales, le tourillon 41 est pourvu d'une tête 43, qui émerge de l'extrémité 23 du levier 20 et qui s'appuie, selon l'axe de basculement Y20 et dans la direction de l'extrémité 11 du collier de serrage 10, contre une face 23B de l'extrémité 23, opposée à la face 23A de cette dernière. A l'extrémité du tourillon 41, opposée axialement à sa tête 43, le tourillon 41 est pourvu d'un filet 44 autour duquel l'écrou 42 peut être vissé tout en prenant appui, selon l'axe de basculement Y20 et en direction de l'extrémité 12 du collier de serrage 10, contre une face 24B de l'extrémité 24 du levier 20, opposée à la face 24A de cette extrémité 24. Ainsi, les deux extrémités 23 et 24 du levier 20, les deux extrémités 11 et 12 du collier de serrage 10 et le système à came 30 sont enserrés, selon l'axe de basculement Y20, entre la tête 43 et l'écrou 42, l'intensité de cet enserrage étant directement liée à l'étendue du vissage de l'écrou 42 sur le filet 44. Les bras 21 et 22 du levier 20 ont une longueur suffisante pour permettre la flexion de ces bras et donc un rapprochement selon l'axe de basculement Y20 des extrémités 23 et 24 nécessaire au réglage du dispositif de serrage 1.

En pratique, l'intensité de cet enserrage est préréglée lors de l'installation et de la maintenance du dispositif de serrage 1. En d'autres termes, l'utilisateur du dispositif de serrage 1 n'est pas sensé dérégler à sa guise le préréglage du système de liaison vis-écrou 40. Dans cette optique, le système de liaison vis-écrou 40 présente des aménagements optionnels avantageux, détaillés ci-après.

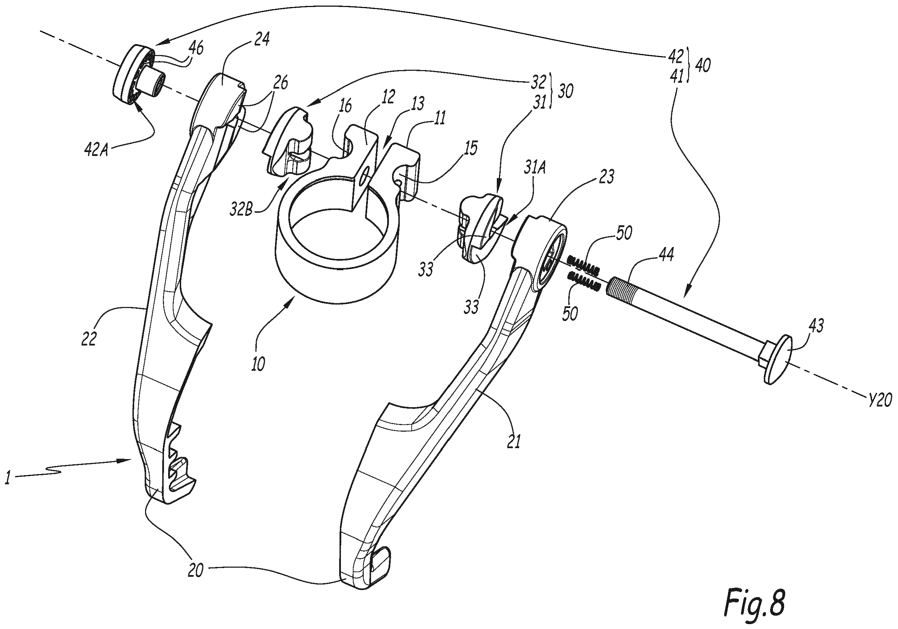

D'abord, lors du basculement du levier 20 entre ses positions ouverte et fermée, la mise en rotation relative entre le tourillon 41 et l'écrou 42 est à éviter. Pour ce faire, le tourillon 41 est avantageusement lié en rotation, autour de l'axe de basculement Y20, au levier 20 : dans l'exemple de réalisation considéré sur les figures, cette liaison en rotation est assurée par complémentarité de formes entre une partie à section carrée 45 du tourillon 41, située sous la tête 43, et un logement complémentaire de l'extrémité 23 du levier 20, creusé dans la face 23B de cette extrémité 23, comme bien visible sur la figure 17. De plus, l'écrou 42 est conçu pour être bloqué en rotation, autour de l'axe de basculement Y20, par rapport à l'extrémité 24 du levier 20 dans une pluralité de positions indexées, réparties autour de l'axe de basculement Y20 : de cette façon, lorsque l'écrou 42 occupe l'une des positions indexées précitées, son dévissage vis-à-vis du tourillon 41 est empêché par blocage vis-à-vis de l'extrémité 24 du levier 20, tout en autorisant, pour un opérateur d'installation ou de maintenance, de débloquer l'écrou vis-à-vis de l'extrémité 24 et ainsi de régler le vissage de l'écrou 42 sur le filet 44. A cet effet, l'écrou 42 présente, sur son côté axial destiné à être tourné vers l'extrémité 24 du levier 20, une face d'appui 42A qui, en service, est appuyée axialement contre et coopère de manière indexée avec la face 24B de l'extrémité 24 du levier 20. Suivant une forme de réalisation avantageuse, la coopération entre les faces 42A et 24B, visant à bloquer la rotation de l'écrou 42 autour de l'axe de basculement Y20 par rapport à l'extrémité 24 du levier 20, est réalisée par complémentarité de formes : ainsi, dans l'exemple de réalisation considéré sur les figures, la face d'appui 42A de l'écrou 42 est pourvue d'une pluralité de calottes sphériques 46 concaves, qui, comme bien visible sur les figures 7 et 8, sont réparties autour de l'axe de basculement Y20, en définissant la pluralité de positions indexées précitée, et qui, à l'état assemblé du dispositif de serrage 1, reçoivent de manière complémentaire une ou plusieurs calottes sphériques 27 convexes qui, comme bien visibles sur les figures 6 et 18, sont prévues en saillie sur la face 24B de l'extrémité 24 du levier 20.

Ensuite, il est souhaitable d'énergiser le dispositif de serrage 1 pour que l'appui axial et de l'écrou 42 contre l'extrémité 24 du levier 20 soit franc en toute circonstance, notamment en tenant compte des jeux et dérives pouvant apparaître dans le temps au sein du dispositif de serrage 1, en particulier du fait de son utilisation régulière et en conditions extérieures.

Pour ce faire, une première approche consiste à ce que le collier de serrage 10 soit prévu résilient de sorte que, même lorsque le levier 20 est dans la position ouverte, le collier de serrage exerce une contrainte, dans l'axe de basculement Y20, qui écarte l'une de l'autre les deux extrémités 11 et 12 du collier de serrage 10. En pratique, le collier est dimensionné pour avoir suffisamment d'élasticité afin que sa déformation reste élastique lorsque le levier 20 est en position fermée. Le collier de serrage 10 est notamment réalisé dans un matériau ayant une bonne résistance élastique, typiquement supérieure à 200 MPa, voire supérieure à 240 MPa. Le collier de serrage 10 peut ainsi être constitué d'aluminium, notamment chargé en silicium et magnésium, et être réalisé par filage, le collier de serrage étant filé ouvert puis usiné en position refermée contrainte, avant d'être libéré après usinage de son alésage intérieur.

Une seconde approche, cumulable avec la première approche, consiste à prévoir que l'élément à serrer 2 soit fendu et ouvert afin de précontraindre le collier de serrage 10 à l'ouverture. En particulier, dans le cadre d'utilisation évoqué précédemment en lien avec un cycle, le tube du cadre de ce cycle, autour duquel le dispositif de serrage 1 est prévu d'être installé, peut ainsi être prévu ouvert par une fente longitudinale puis expansé radialement, par exemple à l'aide d'un mandrin conique, ce qui, par ailleurs, facilite le glissement de la tige de selle à l'intérieur de ce tube.

Une troisième approche, qui est cumulable avec l'une et/ou l'autre des deux approches précitées, consiste à interposer, selon l'axe de basculement Y20, un ou plusieurs ressorts entre le système de liaison vis-écrou 40 et le reste du dispositif de serrage 1. Dans l'exemple de réalisation considéré sur les figures, de tels ressorts, référencés 50, sont ainsi rapportés, en étant interposés axialement entre la tête 43 du tourillon 41 et l'extrémité 23 du levier 20, comme bien visible sur les figures 6 à 8, 17 et 18. A titre d'exemple non limitatif, ces ressorts 50 peuvent assurer un effort axial de l'ordre de 20 N. Ainsi, si l'énergisation résultant du collier de serrage 10 devient insuffisante lorsque le levier 20 est en position ouverte, ce qui peut se produire, par exemple, lorsque le serrage du collier est réalisé sur une très grande course et/ou lorsque le collier ne présente pas une course de précontrainte suffisante en regard de cette course de serrage, ce sont les ressorts 50 qui assurent essentiellement, voire exclusivement l'énergisation de l'indexage du dispositif de serrage, en tirant le tourillon 41 au travers du levier 20 pour plaquer fermement la face d'appui 42A de l'écrou 42 contre la face 24B de l'extrémité 24 du levier 20. Autrement dit, en toute circonstance, notamment malgré un éventuel manque de course élastique du collier de serrage 10, les ressorts 50 activent efficacement la fonction d'anti-déréglage décrite plus haut.

Enfin, même si l'utilisateur du dispositif de serrage 1 doit être dissuadé de modifier le réglage du système de liaison vis-écrou 40, il est préférable que le réglage initial et les réglages de maintenance ultérieurs restent faciles à mettre en oeuvre pour un opérateur. Dans cette optique, selon une disposition optionnelle, l'écrou 42 présente des aménagements, notamment des aménagements de formes, visant à ce que sa mise en rotation autour de l'axe de basculement Y20 nécessite préférentiellement l'utilisation d'un outil spécifique, par exemple une clé pourvue d'ergots agencés de manière complémentaire à une empreinte prévue sur une face 42B de l'écrou 42, opposée à sa face 42A. Par ailleurs, la mise en rotation de l'écrou 42 par l'opérateur doit être réalisée de manière à vaincre la résistance qu'oppose la coopération entre la face 42A de cet écrou et la face 24B de l'extrémité 24 du levier 20. On comprend que, dans le cas où le dispositif de serrage 1 est énergisé comme expliqué plus haut, le couple appliqué par l'opérateur à l'écrou 42 doit être suffisamment élevé pour contrer la résilience du collier de serrage 10 et/ou la résilience de l'élément à serrer 2 et/ou la résilience des ressorts 50 ou de ressorts rapportés similaires. De même, dans le cas, détaillé plus haut, où les faces 42A et 24B coopèrent l'une avec l'autre, notamment par complémentarité de formes, pour bloquer l'écrou 42 par rapport au levier 20 dans une pluralité de positions indexées autour de l'axe de basculement Y20, les faces 42A et 24B doivent être écartées axialement l'une de l'autre pour permettre le passage de l'écrou entre deux de ces positions indexées : dans le cas où la coopération entre les faces 42A et 24B est réalisée par les calottes 46 et 27 décrites plus haut, l'angle de tangence de ces calottes est avantageusement prévu inférieur à 45° de manière que le contact entre les calottes 46 et les calottes 27 soit réversible, si bien que, lorsque l'opérateur exerce un couple sur l'écrou, un effort axial est généré directement par les calottes pour écarter l'écrou 42 de l'extrémité 24 du levier 20. Bien entendu, pour d'autres formes de réalisation de la coopération indexée entre les faces 42A et 24B, la seule application d'un couple à l'écrou 42 par l'opérateur peut s'avérer insuffisante pour autoriser la mise en rotation de l'écrou, l'opérateur devant alors réaliser une manipulation supplémentaire visant à écarter axialement l'une de l'autre les faces 42A et 24B, le cas échéant à l'aide d'un outillage spécifique. Dans tous les cas, l'indexage angulaire entre les faces 42A et 24B permet à l'opérateur de compter et d'apprécier rapidement le nombre de crans d'indexation, nécessaires au préréglage ou au re-réglage du dispositif de serrage 1.

Les différents constituants du dispositif de serrage 1 ayant été au moins partiellement décrits jusqu'ici, on revient ci-après à la description détaillée des faces 31A et 32A des pièces de came 31 et 32, en particulier des surfaces de came 33 et 34 de ces faces 31A et 32A. Par commodité, cette description détaillée ne sera en lien qu'avec l'une des surfaces de came 33, les caractéristiques correspondantes en lien avec l'autre surface de came 33 et les deux surfaces de came 34 pouvant se déduire par des relations de symétrie : en effet, dans l'exemple de réalisation considéré sur les figures, les deux surfaces de came 33, respectivement les deux surfaces de came 34, sont symétriques l'une de l'autre par rapport à l'axe de basculement Y20; de plus, par rapport à un plan géométrique, perpendiculaire à l'axe de basculement Y20 et contenant l'axe central X10, les surfaces de came 33 sont symétriques des surfaces de came 34.

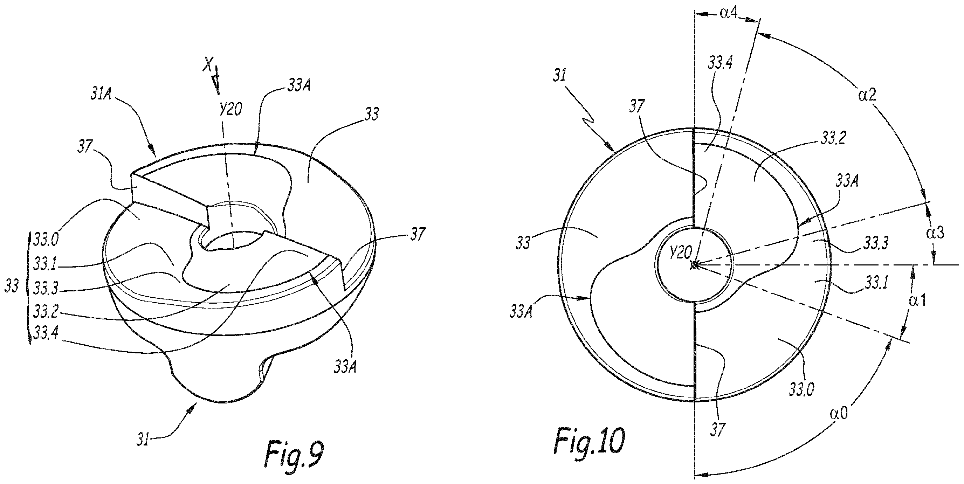

Ainsi, en considérant l'une des surfaces de came 33, cette surface de came est, comme bien visible sur les figures 6 à 9, globalement hélicoïdale, en s'enroulant autour de l'axe de basculement Y20. De plus, comme bien visible sur les figures 9 et 10, cette surface de came 33 inclut successivement :

- une portion de surface 33.0, qui, comparativement au reste de la surface de came 33, est la plus en retrait sur la face 31A, et qui s'étend autour de l'axe de basculement Y20, entre son extrémité angulaire opposée au reste de la surface de came 33 et son extrémité angulaire reliant la portion de surface 33.0 au reste de la surface de came 33, sur un angle noté $\alpha 0$ sur la figure 10, cet angle $\alpha 0$ valant par exemple 75° environ ;
- une portion de surface 33.1, qui s'étend autour de l'axe de basculement Y20, entre son extrémité angulaire la reliant de manière continue à la portion de surface 33.0 et son extrémité opposée, sur un angle noté $\alpha 1$, valant par exemple 20° environ ;
- une portion de surface 33.3, qui s'étend autour de l'axe de basculement Y20, entre son extrémité angulaire la reliant de manière continue à la portion de surface 33.1 et son extrémité opposée, sur un angle noté $\alpha 3$, valant par exemple 15° environ ;
- une portion de surface 33.2, qui s'étend autour de l'axe de basculement Y20, entre son extrémité angulaire la reliant de manière continue à la portion de surface 33.3 et son extrémité angulaire opposée, sur un angle noté $\alpha 2$, valant par exemple 55° environ ; et
- une portion de surface 33.4, qui s'étend autour de l'axe de basculement Y20, entre son extrémité angulaire la reliant de manière continue à la portion de surface 33.2 et son extrémité angulaire opposée, sur un angle noté $\alpha 4$, valant par exemple 15° environ.

De plus, à l'extrémité angulaire de la portion de surface 33.0, opposée à la portion de surface 33.1, cette surface de came 33 est bordée d'un ressaut 37 s'étendant en saillie de cette extrémité angulaire, notamment selon l'axe de basculement Y20. Dans l'exemple de réalisation considéré sur les figures, les deux surfaces de came 33 s'étendent chacune sur 180° autour de l'axe de basculement, de sorte la portion de surface 33.4 de chacune des surfaces de came 33 débouche, à son extrémité angulaire opposée à la portion de surface 33.2, sur le ressaut 37 associée à l'autre surface de came, comme bien visible sur les figures 9 et 10.

A l'état assemblé du dispositif de serrage 1, la surface de contre-came 25, associée à la surface de came 33 détaillée ci-dessus et formant ainsi avec cette dernière une paire surface de came/surface de contre-came, est appuyée sur l'une des portions de surface 33.1 à 33.4 en fonction de la position basculée du levier 20 autour de l'axe de basculement Y20. Plus précisément, comme bien visible sur les figures 12 et 13, lorsque le levier 20 est dans la position ouverte, la surface de contre-came 25, plus précisément le bord 25.2 de cette dernière, est appuyé, selon l'axe de basculement Y20, contre la portion de surface 33.1 : le contact entre le bord 25.2 de la surface de contre-came 25 et la portion de surface 33.1 peut, le cas échéant, être limité à une zone d'étendue angulaire quasi-ponctuelle, alors que, dans le même temps, le bord opposé 25.3 de la surface de contre-came 25 est en butée, suivant une direction périphérique à l'axe de basculement Y20, contre le ressaut 37 associé à la surface de came 33. Comme bien visible sur les figures 14 et 15, lorsque le levier 20 est dans la position fermée, la surface de contre-came 25, en particulier la partie principale 25.1 de cette dernière, est appuyée, selon l'axe de basculement Y20, contre la portion de surface 33.2. On comprend que, lorsque le levier 20 passe de la position ouverte à la position fermée, la surface de contre-came 25 est appuyée, selon l'axe de basculement Y20, contre, successivement, la portion de surface 33.1, la portion de surface 33.3 et la portion de surface 33.2. De même, lorsque le levier passe de la position fermée à la position ouverte, la surface de contre-came 25 est appuyée, selon l'axe de basculement Y20, contre successivement la portion de surface 33.2, la portion de surface 33.3 et la portion de surface 33.2. De plus, on comprend que lorsque le levier 20 tend à être basculé au-delà de sa position fermée, c'est-à-dire de sa position fermée vers une position qui l'éloignerait davantage de sa position ouverte, la surface de contre-came 25, en particulier le bord 25.2 de cette dernière, vient s'appuyer, selon l'axe de basculement Y20, contre la portion de surface 33.4.

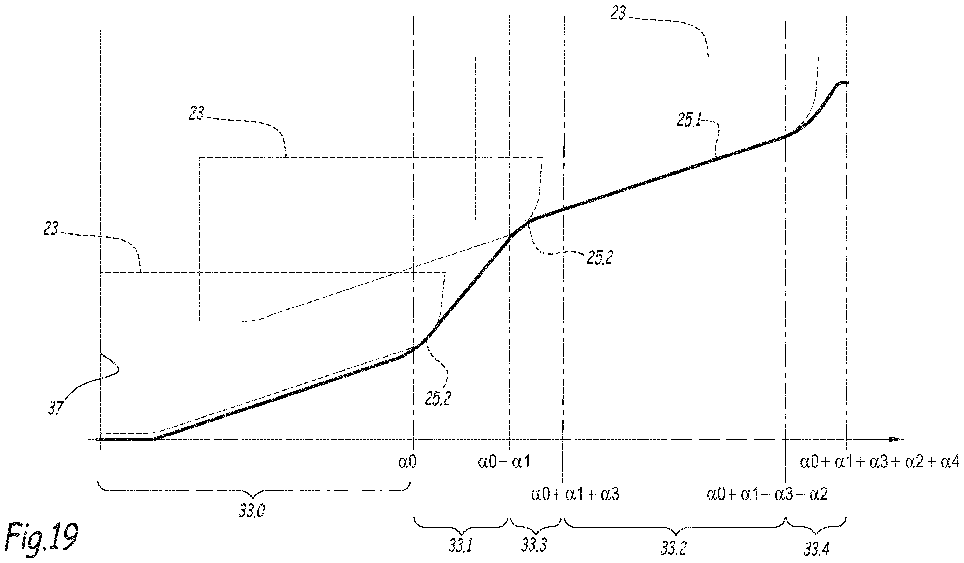

La figure 19 permet de bien visualiser l'appui sélectif de la surface de contre-came 25 contre les portions de surface 33.1 à 33.4 et contre le ressaut 37, en fonction de la position du levier 20 : sur cette figure 19, en fonction de la dimension angulaire de la surface de came 33, repérée par les angles $\alpha0$ à $\alpha4$ définis plus haut, la course axiale, c'est-à-dire la course selon l'axe de basculement Y20, de la pièce de came 31 au niveau de sa surface de came 33 est dessinée, en l'associant à trois profils, représentés en pointillés, de la surface de contre-came 25 : le profil le plus à gauche sur la figure 19 correspond à la position ouverte du levier 20 et le profil le plus à droite correspond à la position fermée de ce levier tandis que le profil du milieu correspond à une position intermédiaire du levier entre les positions ouverte et fermée. La course angulaire du levier 20 entre les positions ouverte et fermée, qui correspond à l'écart angulaire entre le profil le plus à gauche et le profil le plus à droite, peut ainsi valoir 90° environ, comme évoqué plus haut dans le cadre de l'utilisation du dispositif de serrage 1 pour serrer la selle d'un cycle.

La figure 19 permet également de voir que les portions de surface 33.1 à 33.4 ne se retrouvent pas, dans le graphe de cette figure 19, sous forme de pentes respectives alignées. Au contraire, au niveau de la portion de surface 33.1, c'est-à-dire entre les dimensions angulaires $\alpha0$ et $\alpha0+\alpha1$, le graphe de la figure 19 présente une pente plus forte qu'au niveau de la portion de surface 33.2, c'est-à-dire entre les dimensions angulaires $\alpha0+\alpha1+\alpha3$ et $\alpha0+\alpha1+\alpha3+\alpha2$. Ainsi, le pas de la surface de came 33 est plus grand sur la portion de surface 33.1 que sur la portion de surface 33.2, étant remarqué que l'intérêt de cette disposition apparaitra un peu plus loin. La variation du pas entre les portions de surface 33.1 et 33.2 est accommodée de manière continue par la portion de surface 33.3 qui assure ainsi une transition progressive, comme bien visible sur la figure 19. On comprend que, à titre de variante, la portion de surface 33.3 peut présenter une étendue angulaire moindre que celle dans l'exemple des figures, voire présenter une étendue quasi-ponctuelle, du moment que cette portion de surface 33.3 assure matériellement la transition, le cas échéant discontinue géométriquement, entre les portions de surface 33.1 et 33.2.

Comme illustré par la figure 19, le pas de la portion de surface 33.2 est prévu sensiblement égal au pas de la partie principale 25.1 de la surface de came 25. En pratique, les pas respectifs de la portion de surface 33.2 et de la partie principale 25.1 de la surface de came 25 sont égaux, à un jeu fonctionnel près. Plus globalement, la portion de surface 33.2 peut avantageusement être prévue congruente avec la surface de contre-came 25 : de cette façon, lorsque le levier 20 est en position fermée, l'interface de contact entre la surface de came 33 et la surface de contre-came 25 est très étendue, en correspondant sensiblement à toute la portion de surface 33.2, ce qui répartit sur cette dernière les contraintes d'appui entre la surface de came 33 et la surface de contre-came 25. Le fluage de la matière constituant la surface de came 33 est ainsi évité, ce qui permet avantageusement d'envisager de fabriquer la surface de came 33 avec une matière sensible au fluage, en particulier une matière thermoplastique, telle que le polyacétal ou le PBT (poly(téréphtalate de butylène)). L'intérêt d'utiliser une telle matière pour réaliser la surface de came 33 et, plus globalement, pour réaliser toute la pièce de came correspondante 31, est que cette matière est à la fois économique, notamment dans le sens où cette matière peut être injectée dans un moule de conformation de la surface de came 33, résistant à l'usure, et à faible coefficient de friction.

Dans le même temps, le fait qu'il n'y a pas congruence entre les portions de surface 33.1 et 33.3 et la surface de contre-came 25 implique que, lors du passage du levier 20 entre les positions ouverte et fermée, l'appui de la surface de contre-came 25 contre les portions de surface 33.1 et 33.3 induit une pression de contact élevée : toutefois, cela n'induit pas de fluage de la matière constituant la surface de came 33 car cette pression de contact n'est établie que pendant une période de temps très brève, lors de la transition entre les positions ouverte et fermée. De plus, lorsque le levier passe de position ouverte à la position fermée et que le levier est sur le point d'atteindre la position fermée, l'interface de contact entre la surface de came et la surface de contre-came ne cesse de croitre pour atteindre un maximum en fin de serrage tandis que, dans le même temps, l'effort de serrage croît quasiment linéairement jusqu'à son maximum en position fermée.

La figure 19 permet en outre de comprendre que la portion de surface 33.0 de la surface de came 33 n'a pas d'intérêt fonctionnel, dans le sens où cette portion de surface 33.0 n'a pas à établir de mise en contact pressant avec la surface de contre-came 25. En particulier, lorsque le levier 20 est ouvert, la surface de contre-came 25 coopère en appui avec la portion de surface 33.1 et le ressaut 37, comme expliqué plus haut, tout en pouvant rester à distance de la portion de surface 33.0, notamment en prévoyant entre eux un jeu suffisant, comme illustré à la figure 19. Bien entendu, à titre de variante non représentée, la portion de surface 33.0 peut présenter une étendue moindre, voire nulle, moyennant une étendue accrue pour la portion de surface 33.1.

En revenant à la description de la surface de came 33 montrée aux figures 9 et 10, on notera que cette surface de came 33 est bombée de manière à former une crête 33A qui, comme bien visible sur les figures 9 et 10, s'enroule autour de l'axe de basculement Y20, en s'étendant au moins sur les portions de surface 33.1 et 33.2 de la surface de came 33. Dans l'exemple de réalisation considéré ici, la crête 33A s'étend de manière continue sur les portions de surface 33.1, 33.2 et 33.3, en se prolongeant même sur les portions de surface 33.0 et 33.4. Ceci étant, à titre de variante non représentée, la crête 33A peut s'étendre de manière discontinue sur ces portions de surface, le cas échéant en ne courant que sur une partie seulement d'une ou de plusieurs de ces portions de surface. Dans tous les cas, la crête 33A correspond, dans n'importe quel plan de coupe contenant l'axe de basculement Y20, au point le plus saillant de la surface de came 33, autrement dit au sommet du profil bombé de la surface de came. En pratique, ce profil bombé de la surface de came 33 présente un très grand rayon de courbure. En service, c'est-à-dire lorsque la surface de contre-came 25 est appuyée contre la surface de came 33, les contraintes d'appui correspondantes sont concentrées au niveau de la crête 33A.

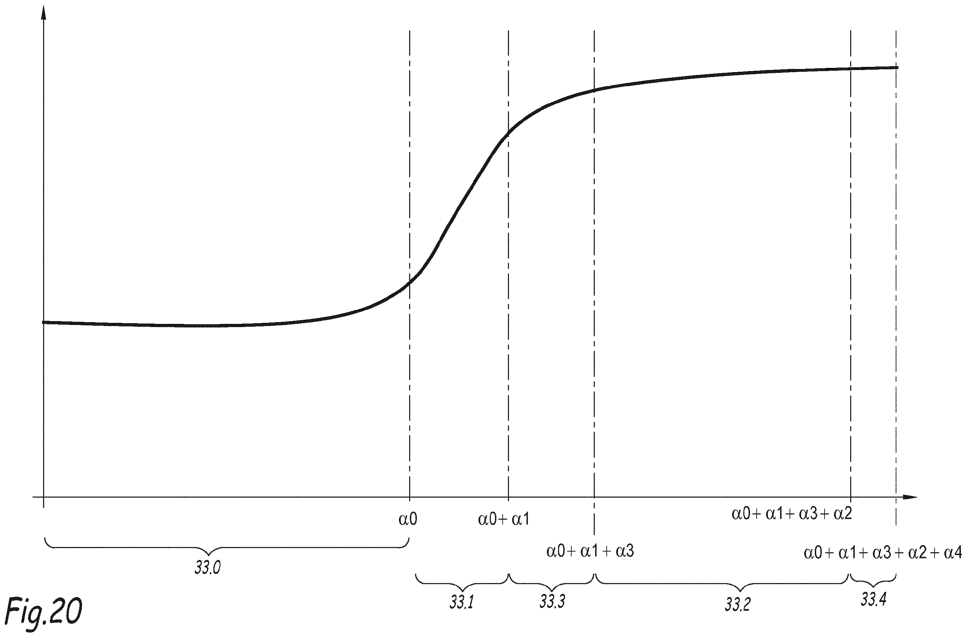

Cette concentration des contraintes au niveau de la crête 33A peut être mise à profit pour améliorer le comportement du système à came 30. Pour ce faire, selon une disposition dont l'intérêt apparaitra un peu plus loin, le rayon, c'est-à-dire la distance radialement à l'axe de basculement Y20, de la crête 33A n'est pas constant autour de cet axe, mais varie en fonction de la dimension angulaire de la surface de came 33, comme bien visible sur les figures 9 et 10 et comme illustré sur la figure 20 qui montre cette évolution du rayon de la crête 33A. Ainsi, le rayon de la crête 33A est plus petit sur la portion de surface 33.1 de la surface de came 33, c'est-à-dire entre les dimensions angulaires $\alpha 0$ et $\alpha 0+\alpha 1$, que sur la portion de surface 33.2, c'est-à-dire entre les dimensions angulaires $\alpha 0+\alpha 1+\alpha 3$ et $\alpha 0+\alpha 1+\alpha 3+\alpha 2$. La différence de rayon entre les portions de surface 33.1 et 33.2 est accommodée par la portion de surface 33.3, sur laquelle la crête voit son rayon varier de manière continue pour faire la transition entre les portions de surface 33.1 et 33.2. En pratique, au sein de chacune des portions de surfaces 33.1 et 33.2, le rayon de la crête 33A peut ne pas être rigoureusement constant, mais peut, comme dans l'exemple montré aux figures, varier, étant remarqué que, pour des raisons qui apparaitront un peu plus loin, la valeur du rayon est avantageusement minimale dans le région de la portion de surface 33.1, opposée à la portion de surface 33.2, et la valeur du rayon est avantageusement maximale dans la région de la portion de surface 33.2, opposée à la portion de surface 33.1.

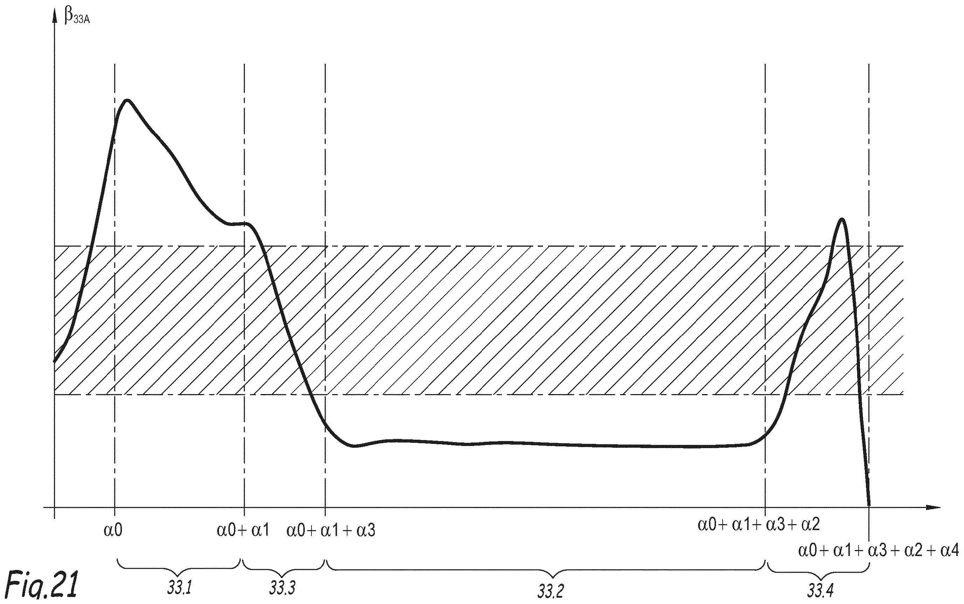

En tenant compte à la fois de la disposition évoquée plus haut, selon laquelle le pas de la surface de came 33 est plus grand sur la portion de surface 33.1 que sur la portion de surface 33.2, et de l'autre disposition évoquée ci-dessus, selon laquelle le rayon de la crête 33A est plus petit sur la portion de surface 33.1 que sur la portion de surface 33.2, on comprend que la crête 33A présente un angle d'hélice $\beta_{33A}$ qui, sans changer de signe, évolue de manière importante en fonction de la dimension angulaire de la surface de came 33, étant rappelé que cet angle d'hélice, qui est mesuré par rapport à un plan perpendiculaire à l'axe de basculement Y20, répond à la relation (1) donnée en introduction. La figure 21 permet de visualiser cette variation de l'angle d'hélice $\beta_{33A}$. En particulier, l'angle d'hélice $\beta_{33A}$, qui est positif sur toute l'étendue fonctionnelle de la surface de came 33, est plus grand sur la portion de surface 33.1, c'est-à-dire entre les dimensions angulaires $\alpha 0$ et $\alpha 0+\alpha 1$, que sur la portion de surface 33.2, c'est-à-dire entre les dimensions angulaires $\alpha 0+\alpha 1+\alpha 3$ et $\alpha 0+\alpha 1+\alpha 3+\alpha 2$. Bien entendu, sur chacune des portions de surface 33.1 et 33.2, la valeur de l'angle d'hélice $\beta_{33A}$ peut ne pas être constante, mais peut varier, comme montré sur la figure 21 : avantageusement, sur la portion de surface 33.1, l'angle d'hélices $\beta_{33A}$ est maximal dans la région de cette dernière opposée à la portion de surface 33.2 ; sur la portion de surface 33.2, l'angle d'hélice $\beta_{33A}$ est minimal dans la région de cette dernière opposée à la portion de surface 33.1. Entre les portions de surface 33.1 et 33.3, la portion de surface 33.2 accommode la variation de l'angle d'hélice $\beta_{33A}$.

Plus généralement, comme illustré par la figure 21, la valeur de l'angle d'hélice $\beta_{33A}$ sur la portion de surface 33.1 et la valeur de l'angle d'hélice $\beta_{33A}$ sur la portion de surface 33.2 sont prévues respectivement supérieure et inférieure à une région d'angle, qui est hachurée sur la figure 21 et de part et d'autre de laquelle l'appui entre la surface de came 33 et la surface de contre-came 25 ne présente pas la même stabilité, dans le sens où, au-dessus de cette région, ce comportement est instable, autrement dit réversible, tandis qu'au-dessous de cette région, ce comportement est stable, autrement dit irréversible. Cet aspect de stabilité est à rapprocher de la figure 2, présentée au début du présent document, dans le sens où la région précitée correspond à $\varphi$, c'est-à-dire à l'arc tangente du coefficient de frottement pour le couple de matières constituant la surface de came 33 et la surface de contre-came 25, en considérant que ce coefficient de frottement appartient à une plage de valeurs donnée, dont l'étendue explique l'étendue en ordonnées de la région d'angle précitée. A titre d'exemple, lorsque la surface de came 33 est réalisée en polyacétal et le levier en polyamide chargé de fibres de verre, le coefficient de frottement de ce couple de matières peut être considéré compris entre 0,1 et 0,23 de sorte que $\varphi$ est compris entre environ 6° et 13°. Dans le prolongement de cet exemple, on comprend que l'angle d'hélice $\beta_{33A}$ est avantageusement prévu supérieur à 13°, voire à 14° sur toute la portion de surface 33.1, et prévu inférieur à 6°, voire à 5° sur toute la portion de surface 33.2.

En tenant compte des explications qui précèdent, ainsi que des explications données en lien avec la figure 2, on comprend que :

- lorsque le levier 20 est en positon ouverte et tend, sous l'effet de son propre poids, à basculer vers la position fermée, la réversibilité de l'appui entre la surface de contre-came 25 et la portion de surface maintient le levier 20 en position ouverte, étant remarqué que, avantageusement, l'énergisation, détaillée plus haut, du dispositif de serrage 1 tend à forcer le levier 20 à rester « le plus ouvert possible », c'est-à-dire comme illustré par le profil du levier, le plus à gauche sur la figure 19 ; et

- lorsque le levier 20 est en position fermée, l'appui entre la surface de contre-came 25 et la portion de surface 33.2 de la surface de came 33 est irréversible, ce qui stabilise le levier 20 en position fermée, en empêchant tout basculement inopiné du levier 20 vers sa position ouverte tant que l'utilisateur n'applique pas un couple suffisamment fort pour vaincre l'irréversibilité de cet appui.

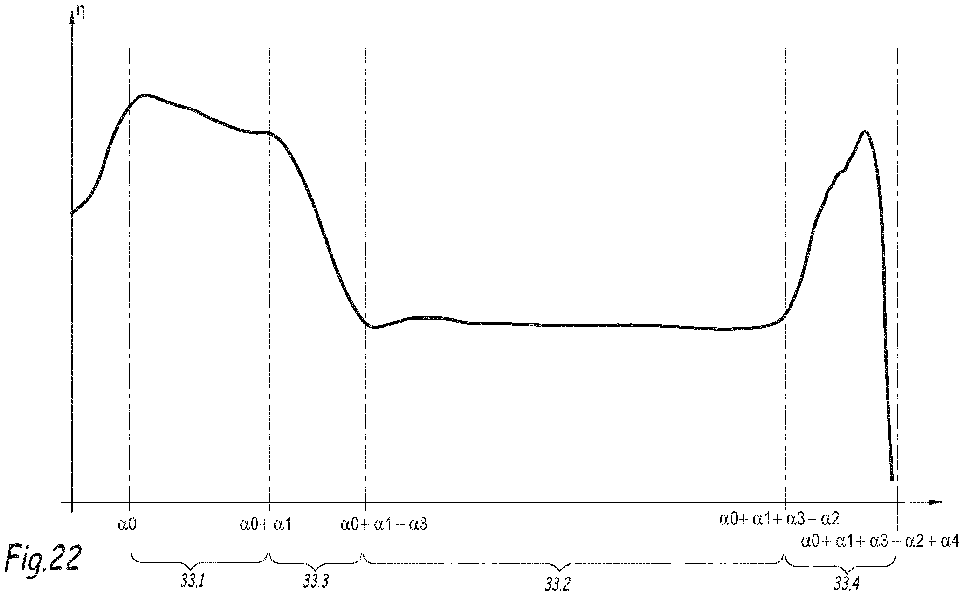

L'évolution de la valeur de l'angle d'hélice $\beta_{33A}$ est également bénéfique sur le rendement du serrage par la surface de came 33, comme illustré par la figure 22, étant rappelé que le rendement de serrage a été défini précédemment par la relation (5). En particulier, la figure 22 montre que lors du passage du levier 20 de la position ouverte à la position fermée, le rendement de serrage est très bon, comparativement à celui lorsque le levier est dans la position fermée. C'est bien dans cette phase transitoire que le pas élevé de la portion de surface 33.1 permet d'augmenter notablement la course de serrage, sans augmenter le couple de serrage maximal comme évoqué ci-après.

De même, le couple au serrage et le couple au desserrage, que l'utilisateur doit appliquer au levier 20 pour le fermer et l'ouvrir, sont favorablement impactés par la conformation, détaillée jusqu'ici, de la surface de came 33.

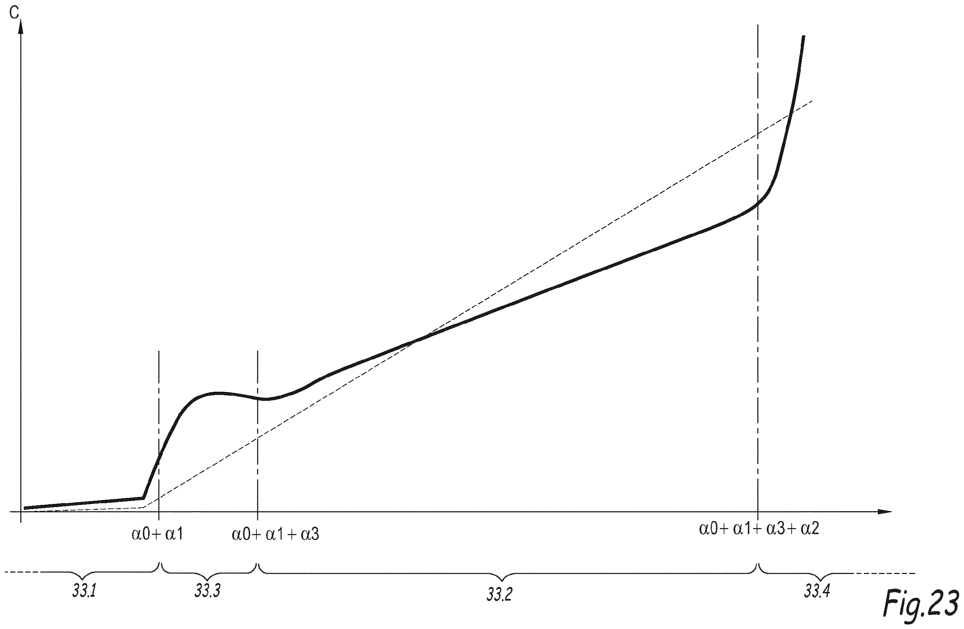

La figure 23, qui montre l'évolution du couple de serrage, en lien avec la relation (4) donnée plus haut, en fonction de la position angulaire du levier repérée par les dimensions angulaires $\alpha0$, $\alpha1$, $\alpha2$, $\alpha3$ et $\alpha4$ détaillées plus haut, permet d'observer que l'effort à appliquer par l'utilisateur est important uniquement lors de l'amorçage du serrage, c'est-à-dire lorsque le levier 20 quitte sa position ouverte vers sa position fermée, tout en augmentant ensuite de manière beaucoup plus faible, jusqu'à atteindre une valeur maximale. Comparativement au couple de serrage à appliquer à une surface de came hélicoïdale à pas constant et avec pourtours intérieur et extérieur à rayon respectifs constants, dont l'évolution est tracée en pointillés sur la figure 23 et qui est rigoureusement linéaire entre les positions ouverte et fermée du levier, la valeur maximale précitée est inférieure à l'effort que doit produire l'utilisateur pour atteindre la position fermée. La figure 23 permet également d'observer que, au-delà de la position fermée, la surface de came 33 induit une brusque augmentation du couple de serrage, ce qui est lié à la présence de la portion de surface 33.4 : grâce à cette portion de surface 33.4, l'utilisateur ressent nettement qu'il a basculé le levier 20 jusqu'à la position fermée, sans qu'il ne soit nécessaire de basculer davantage le levier.

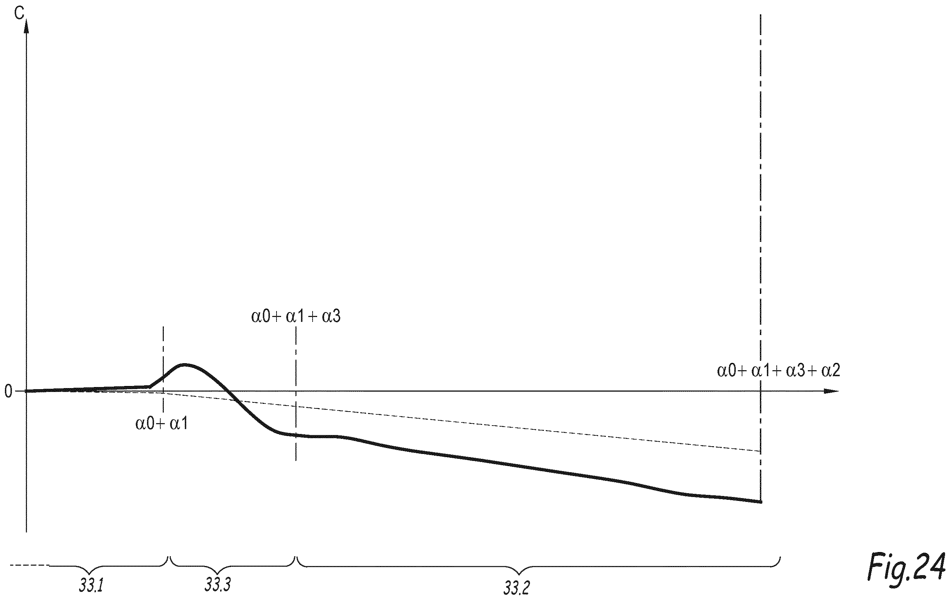

La figure 24 illustre l'évolution du couple de desserrage, en lien avec la relation (7) qui a été donnée plus haut. La figure 24 permet d'observer que le couple à appliquer par l'utilisateur, qui est négatif lorsque le levier 20 quitte sa position fermée vers sa position ouverte, devient positif lorsque le levier est proche d'atteindre sa position ouverte : en d'autres termes, dès lors que l'utilisateur a suffisamment éloigné le levier 20 de sa position fermée vers sa position ouverte, le levier bascule de manière réversible automatiquement jusqu'à sa position ouverte, ce qui donne une indication franche à l'utilisateur que cette position ouverte est ainsi atteinte. De plus, comparativement au couple de desserrage pour une surface de came hélicoïdale à pas constant et avec pourtours intérieur et extérieur à rayon respectifs constants, dont l'évolution est tracée en pointillés sur la figure 24, la surface de came 33 permet d'avoir une plus grande stabilité à l'amorce du desserrage, dans le sens où à l'amorce du desserrage, le couple de desserrage à appliquer à la surface de came 33 est beaucoup plus négatif que celui pour une surface de came hélicoïdale à pas constant et avec pourtours intérieur et extérieur à rayons respectifs constants.

Sur la base des considérations développées jusqu'ici, on comprend que faire varier l'angle d'hélice $\beta_{33A}$ de la crête 33A, pour que cet angle d'hélice soit plus grand au niveau de la portion de surface 33.1 qu'au niveau de la portion de surface 33.2, présente des intérêts substantiels et nombreux pour le dispositif de serrage 1. Comme expliqué plus haut, dans l'exemple de réalisation considéré sur les figures, la variation de l'angle d'hélice $\beta_{33A}$ est liée, pour partie, à la variation du pas entre les portions de surface 33.1 et 33.2 et, pour une autre partie, à la variation du rayon de la crête 33A, et ce en lien avec la relation (1) donnée plus haut. Bien entendu, plutôt que de jouer à la fois sur le pas et sur le rayon de la crête, il est possible, à titre de variante, de ne jouer que sur l'une ou l'autre de ces deux dispositions. En d'autres termes, une variante consiste en ce que chaque surface de came soit à pas constant, mais pourvue d'une crête à rayon variable, telle que la crête 33A pour les surfaces de came 33. Une autre variante consiste à ce que chaque surface de came soit pourvue d'une crête ayant un rayon constant, tout en présentant un pas variable entre ses portions correspondant aux portions de surface 33.1 et 33.2 telles que décrites sur les figures.

Encore une autre possibilité de variantes concerne la crête 33A en elle-même. En effet, une telle crête peut ne pas être prévue sur les surfaces de came 33 : dans ce cas, le profil, en coupe dans n'importe quel plan axial contenant l'axe de basculement Y20, de chaque surface de came est rectiligne. La variation de l'angle d'hélice ne pouvant plus être appréciée le long d'une crête similaire à la crête 33A, cette variation s'apprécie, pour chaque surface de came, le long d'une hélice géométrique, qui est centrée sur l'axe de basculement Y20 et qui, en coupe dans n'importe quel plan axial contenant l'axe de basculement Y20, présente un rayon répondant à la relation (2) donnée plus haut, c'est-à-dire un rayon équivalent req égal à $2/3.(rext^3-rint^3)/(rext^2-rint^2)$ où rext et rint sont les rayons respectivement extérieur et intérieur de la surface de came, mesurés dans le plan axial précité. Il y a bien lieu de comprendre que cette hélice géométrique est fonctionnellement similaire à la crête 33A envisagée pour l'exemple considéré sur les figures, dans le sens où aussi bien la crête 33A, que cette hélice géométrique en l'absence de crête, constituent une hélice d'appui, qui s'enroule autour de l'axe de basculement Y20, en s'étendant au moins partiellement sur les portions de surface 33.1 et 33.2 de la surface de came 33, et au niveau de laquelle s'appliquent les contraintes d'appui entre la surface de came 33 et la surface de contre-came associée 25. Bien entendu, dans la variante envisagée ici, où chaque surface de came est dépourvue d'une crête mais définit l'hélice géométrique précitée, la variation de l'angle d'hélice de cette hélice géométrique résulte soit de la variation du pas entre les portions de surface 33.1 et 33.2 de la surface de came, soit d'une variation appropriée du rayon extérieur et/ou du rayon intérieur de la surface de came, soit de la combinaison de ces deux dispositions respectivement relatives au pas et aux rayons intérieur et extérieur de la surface de came.

Divers aménagements et variantes au dispositif de serrage 1 décrit jusqu'ici sont par ailleurs envisageables :

- l'agencement des surfaces de came 33 et 34 et des surfaces de contre-came 25 et 26 sur, respectivement, les pièces de came 31 et 32 et les extrémités 23 et 24 du levier 20 peut être inversé ;
- plutôt que de prévoir deux surfaces de came 33, respectivement 34, pour chacune des pièces de came 31 et 32, une seule surface de came peut être prévue, en étant alors associée à une unique surface de contre-came ;
- plutôt que d'en prévoir deux, une seule pièce de came 31 ou 32 peut être prévue ; et/ou
- plutôt que d'être à déformation, le collier de serrage 10 peut être prévu articulé pour permettre le rapprochement/écartement relatif de ses extrémités 11 et 12.

## Revendications

1. Dispositif de serrage (1), notamment de serrage d'une selle pour un cycle, comportant :

   - un collier de serrage (10), qui définit un axe central (X10), qui est destiné à entourer de manière sensiblement coaxiale un élément à serrer (2), notamment un tube de réception d'une tige de selle, et qui est ouvert de manière à présenter deux extrémités (11, 12) aptes à se rapprocher l'une de l'autre afin d'enserrer l'élément à serrer, et
   - un levier (20), qui est monté basculant sur les extrémités (11, 12) du collier de serrage (10) autour d'un axe de basculement (Y20) s'étendant de manière sensiblement perpendiculaire à l'axe central (X10), et qui est connecté au collier de serrage par un système à came (30) qui est actionnable par basculement du levier autour de l'axe de basculement entre une position ouverte, dans laquelle le collier de serrage est desserré, et une position fermée, dans laquelle le collier de serrage est serré ;

dans lequel le système à came (30) inclut au moins une paire associant une surface de came (33, 34) et une surface de contre-came (25, 26), qui sont chacune globalement hélicoïdales en s'enroulant autour de l'axe de basculement (Y20) et qui sont respectivement liées en rotation autour de l'axe de basculement à l'un et l'autre du collier de serrage (10) et du levier (20) ;
dans lequel la surface de came (33, 34) de la ou chaque paire du système à came (30) inclut :

   - une première portion de surface (33.1) contre laquelle la surface de contre-came associée (25, 26) est appuyée selon l'axe de basculement (Y20) à la fois lorsque le levier (20) est dans la position ouverte et lorsque le levier est basculé de la position ouverte vers la position fermée, et
   - une deuxième portion de surface (33.2), qui est reliée à la première portion de surface (33.1) par une troisième portion de surface (33.3) de la surface de came, et contre laquelle la surface de contre-came associée est appuyée selon l'axe de basculement à la fois lorsque le levier est dans la position fermée et lorsque le levier est basculé de la position fermée vers la position ouverte ;

dans lequel la surface de contre-came (25, 26) de la ou chaque paire du système à came (30) inclut une partie principale (25.1, 26.1), qui est hélicoïdale, en étant centrée sur l'axe de basculement (Y20) et en ayant un pas constant, et qui est appuyée selon l'axe de basculement contre la deuxième portion de surface (33.2) de la surface de came associée (33, 34) lorsque le levier est dans la position fermée ;
dans lequel la deuxième portion de surface (33.2) de la surface de came (33, 34) de la ou chaque paire du système à came (30) a un pas qui est sensiblement égal au pas constant de la partie principale (25.1, 26.1) de la surface de contre-came associée (25, 26) ; et
dans lequel la surface de came (33, 34) de la ou chaque paire du système à came (30) définit une hélice d'appui (33A) au niveau de laquelle s'appliquent les contraintes d'appui entre la surface de came et la surface de contre-came associée (25, 26), laquelle hélice d'appui s'enroule autour de l'axe de basculement (Y20) en s'étendant au moins partiellement sur les première (33.1) et deuxième (33.2) portions de surface de la surface de came, **caractérisé en ce que** l'hélice d'appui (33A) de la surface de came (33, 34) de la ou chaque paire du système à came (30) présente un angle d'hélice ($\beta_{33A}$), mesuré par rapport à un plan perpendiculaire à l'axe de basculement (Y20), qui est plus grand sur la première portion de surface (33.1) de la surface de came que sur la deuxième portion (33.2) de la surface de came.

2. Dispositif de serrage suivant la revendication 1, **caractérisé en ce que** la surface de came (33, 34) de la ou chaque paire du système à came (30) est bombée de manière à former une crête (33A) de concentration des contraintes d'appui entre la surface de came et la surface de contre-came associée (25, 26), ladite crête constituant l'hélice d'appui.

3. Dispositif de serrage suivant la revendication 1, **caractérisé en ce que** la surface de came de la ou chaque paire du système à came présente, en coupe dans n'importe quel plan axial contenant l'axe de basculement (Y20) et intersectant la surface de came, un profil rectiligne, et **en ce que** l'hélice d'appui correspond à une hélice géométrique, qui est centrée sur l'axe de basculement (Y20) et qui, en coupe dans n'importe quel plan axial contenant l'axe de basculement (Y20) et intersectant la surface de came, présente un rayon (req) qui est égal à $2/3.(r_{ext}^3-r_{int}^3)/(r_{ext}^2-r_{int}^2)$ où rext et rint sont les rayons respectivement extérieur et intérieur de la surface de came, mesurés dans ledit plan axial.

4. Dispositif de serrage suivant l'une quelconque des revendications précédentes, **caractérisé en ce que** la surface de came (33, 34) de la ou chaque paire du système à came (30) présente un pas qui est plus grand sur la première portion de surface (33.1) de la surface de came que sur la deuxième portion de surface (33.2) de la surface de came.

5. Dispositif de serrage suivant l'une quelconque des revendications précédentes, **caractérisé en ce que** l'hélice d'appui (33A) de la surface de came (33, 34) de la ou chaque paire du système à came (30) présente un rayon, mesuré par rapport à l'axe de basculement (Y20), qui est plus petit sur la première portion de surface (33.1) de la surface de came que sur la deuxième portion de surface (33.2) de la surface de came.

6. Dispositif de serrage suivant l'une quelconque des revendications précédentes, **caractérisé en ce que** l'angle d'hélice ($\beta_{33A}$) de l'hélice d'appui (33A) de la surface de came (33, 34) de la ou chaque paire du système à came (30) est :

- supérieur à 13°, voire supérieur à 14° sur sensiblement toute la première portion de surface (33.1) de la surface de came, et
- inférieur à 6°, voire inférieur à 5° sur sensiblement toute la deuxième portion de surface (33.2) de la surface de came.

7. Dispositif de serrage suivant l'une quelconque des revendications précédentes, **caractérisé en ce que** la deuxième portion de surface (33.2) de la surface de came (33, 34) de la ou chaque paire du système à came (30) est congruente avec la surface de contre-came associée (25, 26).

8. Dispositif de serrage suivant l'une quelconque des revendications précédentes, **caractérisé en ce que** la surface de came (33, 34) de la ou chaque paire du système à came (30) inclut en outre une quatrième portion de surface (33.4) qui s'étend depuis la deuxième portion de surface (33.2) à l'opposé de la troisième portion de surface (33.3), en étant reliée à la deuxième portion de surface de manière continue, et **en ce que** le pas de la surface de came (33, 34) de la ou chaque paire du système à came (30) est plus grand sur la quatrième portion de surface (33.4) de la surface de came que sur la deuxième portion de surface (33.2).

9. Dispositif de serrage suivant l'une quelconque des revendications précédentes, **caractérisé en ce que** le système à came (30) inclut :

- deux paires dont les surfaces de came respectives (33, 34) sont symétriques l'une de l'autre par rapport à l'axe de basculement, et/ou
- deux paires dont les surfaces de came respectives (33, 34) sont agencées respectivement de part et d'autre, selon l'axe de basculement (Y20), des deux extrémités (11, 12) du collier de serrage (10).

10. Dispositif de serrage suivant l'une quelconque des revendications précédentes, **caractérisé en ce que** le système à came (30) inclut au moins une pièce de came (31, 32) :

- qui est distincte du collier de serrage (10) et du levier (20), en étant interposée, selon l'axe de basculement (Y20), entre le levier et l'une des extrémités (11, 12) du collier de serrage,
- qui, pour chaque paire du système à came, délimite, sur une première face (31A, 32A) de la pièce de came, soit la surface de came correspondante (33, 34), soit la surface de contre-came correspondante (25, 26), et
- qui, sur une seconde face (31B, 32B) de la pièce de came qui est opposée à la première face selon l'axe de basculement (Y20), est pourvue d'une surface cylindrique (35, 36), qui est centrée sur un axe de pivotement (X35, X36) parallèle à l'axe central (X10) et sécant à l'axe de basculement (Y20), et qui coopère par complémentarité de formes avec une surface cylindrique (15, 16) du collier de serrage (10) de façon que la pièce de came soit à la fois liée en rotation autour de l'axe de basculement au collier de serrage et appuyée selon l'axe de basculement contre le collier, tout en autorisant un débattement en pivotement autour de l'axe de pivotement.

11. Dispositif de serrage suivant l'une quelconque des revendications précédentes, **caractérisé en ce que** le dispositif de serrage (1) comprend en outre un tourillon (41), qui traverse les deux extrémités (11, 12) du collier de serrage (10) en étant centré sur l'axe de basculement (Y20), qui est lié en rotation autour de l'axe de basculement au levier (20), et qui est pourvu, de manière axialement opposée selon l'axe de basculement, d'une tête (43) et d'un filet (44) auquel est vissé un écrou (42), de sorte que les deux extrémités du collier de serrage, le levier et le système à came (30) sont enserrés, selon l'axe de basculement, entre la tête et l'écrou,
et **en ce que** l'écrou (42) inclut une face d'appui (42A), qui est appuyée, selon l'axe de basculement (Y20), contre une face d'indexage (24B) du levier (20), en coopérant avec cette face d'indexage, notamment par complémentarité de formes, de manière à bloquer la rotation de l'écrou autour de l'axe de basculement par rapport au levier dans une pluralité de positions indexées, le passage de l'écrou entre deux de ces positions indexées étant commandé par écartement axial entre la face d'appui et la face d'indexage.

12. Dispositif de serrage suivant la revendication 11, **caractérisé en ce que** l'une de la face d'appui (42A) et de la face d'indexage (24B) est pourvue d'une pluralité de calottes sphériques concaves (46), qui sont réparties autour de l'axe de basculement (Y20) en définissant la pluralité de positions indexées, et **en ce que** l'autre de la face d'appui et de la face d'indexage est pourvue d'au moins une calotte sphérique convexe (26) qui est sélectivement reçue de manière complémentaire dans l'une des calottes sphériques concaves.

13. Dispositif de serrage suivant l'une des revendications 11 ou 12, **caractérisé en ce que** le dispositif de serrage (1) comprend en outre au moins un ressort (50) qui est interposé, selon l'axe de basculement (Y20), entre le tourillon (41) et le levier (20) de manière à plaquer la face d'appui (42A) et la face d'indexage (24B) l'une contre l'autre selon l'axe de basculement.

14. Dispositif de serrage suivant l'une quelconque des revendications précédentes, **caractérisé en ce que** le collier de serrage (10) est prévu résilient de sorte que, même lorsque le levier (20) est dans la position ouverte, le collier de serrage (10) exerce une contrainte élastique qui écarte l'une de l'autre les deux extrémités (11, 12) du collier de serrage.

15. Dispositif de serrage suivant l'une quelconque des revendications précédentes, **caractérisé en ce que** la surface de came (33, 34) de la ou chaque paire du système à came (30) est réalisée en une matière thermoplastique, notamment en polyacétal ou en PBT.

**Patentansprüche**

1. Spannvorrichtung (1), insbesondere zum Festziehen eines Sattels auf einem Fahrrad, mit:

- - einem Spannring (10), der eine zentrale Achse (X10) definiert, dazu bestimmt im Wesentlichen koaxial um ein einzuklemmendes Element (2), insbesondere das Aufnahmerohr einer Sattelstütze, zu greifen, und der in einer Art und Weise offen ist, dass er zwei Enden (11, 12) aufweist, die sich einander annähern können, um das einzuklemmende Element einzuklemmen, und

- - einem Hebel (20), der an den Enden (11, 12) des Spannrings (10) um eine Kippachse (Y20) kippbar montiert ist , die im Wesentlichen senkrecht zur zentralen Achse (X10) verläuft und die mit dem Spannring über ein Nockensystem (30) verbunden ist, das durch Kippen des Hebels um die Kippachse herum zwischen einer offenen Position, in der der Spannring gelöst ist und einer geschlossenen Position, in der der Spannring angezogen ist, betätigt werden kann;
- wobei das Nockensystem (30) mindestens ein Paar enthält, in dem eine Nockenfläche (33, 34) und eine Führungsnockenfläche (25, 26) verbunden sind, die jeweils global schneckenförmig sind und sich um die Kippachse (Y20) winden und die jeweils um die Kippachse drehbar mit sowohl dem Spannring (10) wie dem Hebel (20) verbunden sind;
- bei dem die Nockenfläche (33, 34) jedes Paars des Nockensystems (30) enthält:

-- einen ersten Oberflächenabschnitt (33.1) gegen den die zugehörige Führungsnockenfläche (25, 26) entsprechend der Kippachse (Y20) gedrückt wird, immer dann, wenn sich der Hebel (20) in einer offenen Position befindet und wenn der Hebel aus der offenen Position in die geschlossene Position gekippt wird, und

- -einen zweiten Oberflächenabschnitt (33.2), der mit dem ersten Abschnitt (33.1) über einen dritten Oberflächenabschnitt (33.3) der Nockenfläche verbunden ist, und gegen den die zugehörige Führungsnockenfläche entsprechend der Kippachse gedrückt wird, immer dann wenn sich der Hebel in der geschlossenen Position befindet und wenn der Hebel aus der geschlossenen Position in die offene Position gekippt wird;

- bei dem die Führungsnockenfläche (25, 26) jedes Paars des Nockensystems (30) einen Hauptteil (25.1, 26.1) umfasst, der spiralförmig ist, und dabei auf die Kippachse (Y20) bezogen zentriert ist, mit einer konstanten Steigung und der entsprechend der Kippachse gegen den zweiten Oberflächenabschnitt (33.2) der zugehörigen Nockenfläche (33, 34) gedrückt wird, wenn sich der Hebel in der geschlossenen Position befindet;
- bei dem der zweite Flächenabschnitt (33.2) der Nockenfläche (33, 34) jedes Paars des Nockensystems (30) eine Steigung aufweist, die im Wesentlichen gleich der konstanten Steigung des Hauptteils (25.1, 26.1) der zugehörigen Führungsnockenfläche (25, 26) ist; und
- bei dem die Nockenfläche (33, 34) jedes Paars des Nockensystems (30) eine Stützschraube (33A) definiert, auf der die Stützspannungen zwischen der Nockenfläche und der zugehörigen Führungsnockenfläche (25, 26) auftreffen, diese Stützschraube windet sich um die Kippachse (Y20) und verläuft zumindest teilweise über den ersten (33.1) und den zweiten (33.2) Flächenabschnitt der Nockenfläche,
- **dadurch gekennzeichnet, dass** die Stützschraube (33A) der Nockenfläche (33, 34) des oder jedes Paars des Nockensystems (30) einen Steigungswinkel ($\beta_{33A}$) aufweist, gemessen bezogen auf eine zur Kippachse (Y20) senkrechte Ebene, der auf dem ersten Flächenabschnitt (33.1) der Nockenfläche größer ist, als im zweiten Abschnitt (33.2) der Nockenfläche.

2. Spannvorrichtung nach Anspruch 1, **dadurch gekennzeichnet, dass** die Nockenfläche (33, 34) des oder jedes Paars des Nockensystems (30) gewölbt ist, so dass sie eine Kammlinie (33A) bildet, in der sich die Stützspannungen zwischen der Nockenfläche und der zugehörigen Führungsnockenfläche (25, 26) konzentrieren, diese Kammlinie bildet die Stützschraube.

3. Spannvorrichtung nach Anspruch 1, **dadurch gekennzeichnet, dass** die Nockenfläche des oder jedes Paars des Nockensystems im Schnitt, in einer beliebigen axialen Ebene, die die Kippachse (Y20) enthält und die Nockenfläche schneidet, ein rechtwinkliges Profil aufweist, und

dass die Stützschraube einer geometrischen Schraube entspricht, die auf die Kippachse (Y20) zentriert ist und die im Schnitt, in einer beliebigen axialen Ebene, die die Kippachse (Y20) enthält und die Nockenfläche schneidet, einen Radius (req) aufweist, der gleich $2/3.(\text{rext}^3-\text{rint}^3)/(\text{rext}^2-\text{rint}^2)$ ist, worin rext und rint der Außen- bzw. Innenradius der Nockenfläche sind, gemessen in der genannten axialen Ebene.

4. Spannvorrichtung nach einem beliebigen der vorangehenden Ansprüche, **dadurch gekennzeichnet, dass** die Nockenfläche (33, 34) des oder jedes Paars des Nockensystems (30) eine Steigung aufweist, die auf dem ersten Flächenabschnitt (33.1) der Nockenfläche größer ist, als auf dem zweiten Flächenabschnitt (33.2) der Nockenfläche.

5. Spannvorrichtung nach einem beliebigen der vorangehenden Ansprüche, **dadurch gekennzeichnet, dass** die Stützschraube (33A) der Nockenfläche (33, 34) des oder jedes Paars des Nockensystems (30) einen Radius aufweist, der, gemessen entsprechend der Kippachse (Y20), auf dem ersten Flächenabschnitt (33.1) der Nockenfläche kleiner ist, als auf dem zweiten Flächenabschnitt (33.2) der Nockenfläche.

6. Spannvorrichtung nach einem beliebigen der vorangehenden Ansprüche, **dadurch gekennzeichnet, dass** der Steigungswinkel ($\beta_{33A}$) der Stützschraube (33A) der Nockenfläche (33, 34) des oder jedes Paars des Nockensystems (30):

    - - größer als 13° ist, sogar größer als 14° auf im Wesentlichen dem gesamten ersten Flächenabschnitt (33.1) der Nockenfläche, und
    - - kleiner als 6°, sogar kleiner als 5° auf im Wesentlichen dem gesamten zweiten Flächenabschnitt (33.2) der Nockenfläche.

7. Spannvorrichtung nach einem beliebigen der vorangehenden Ansprüche, **dadurch gekennzeichnet, dass** der zweite Flächenabschnitt (33.2) der Nockenfläche (33, 34) des oder jedes Paars des Nockensystems (30) kongruent mit der zugehörigen Führungsnockenfläche (25, 26) ist.

8. Spannvorrichtung nach einem beliebigen der vorangehenden Ansprüche, **dadurch gekennzeichnet, dass** die Nockenfläche (33, 34) des oder jedes Paars des Nockensystems (30) außerdem einen vierten Flächenabschnitt (33.4) enthält, der vom zweiten Flächenabschnitt (33.2) gegenüberliegend zum dritten Flächenabschnitt (33.3), verläuft und mit dem zweiten Flächenabschnitt kontinuierlich verbunden ist, und

dadurch, dass die Steigung der Nockenfläche (33, 34) des oder jedes Paars des Nockensystems (30) auf dem vierten Flächenabschnitt (33.4) der Nockenfläche größer ist als auf dem zweiten Flächenabschnitt (33.2).

9. Spannvorrichtung nach einem beliebigen der vorangehenden Ansprüche, **dadurch gekennzeichnet, dass** das Nockensystem (30) umfasst:

   - zwei Paare, deren jeweilige Nockenflächen (33, 34) entsprechend der Kippachse zueinander symmetrisch sind und/ oder
   - zwei Paare, deren jeweilige Nockenflächen (33, 34) jeweils, entsprechend der Kippachse (Y20), beiderseits der beiden Enden (11, 12) des Spannrings (10) angeordnet sind.

10. Spannvorrichtung nach einem beliebigen der vorangehenden Ansprüche, **dadurch gekennzeichnet, dass** das Nockensystem (30) mindestens ein Nockenteil (31,32): umfasst:

    - das vom Spannring (10) und dem Hebel (20) getrennt ist, da es, entsprechend der Kippachse (Y20), zwischen dem Hebel und einem der Enden (11, 12) des Spannrings untergebracht ist,
    - das bei jedem Paar des Nockensystems auf einer ersten Fläche (31 A, 32A) des Nockenteils entweder die entsprechende Nockenfläche (33, 34) begrenzt, oder die entsprechende Führungsnockenfläche (25, 26), und

    das auf einer zweiten Fläche (31 B, 32B) des Nockenteils, die der ersten Fläche entsprechend der Kippachse (Y20) gegenüberliegt, mit einer zylindrischen Oberfläche (35, 36) versehen ist, die entsprechend einer Kippachse (X35, X36) zentriert ist, die parallel zur zentralen Achse (X10) liegt und die Kippachse (Y20) schneidet, und die formschlüssig mit einer zylindrischen Oberfläche (15, 16) des Spannrings (10) zusammenarbeitet, so dass das Nockenteil gleichzeitig drehbar um die Kippachse herum mit dem Spannring verbunden ist und sich entsprechend der Kippachse gegen den Spannring stützt, wobei jedoch eine Kippbewegung um die Kippachse herum möglich ist.

11. Spannvorrichtung nach einem beliebigen der vorangehenden Ansprüche, **dadurch gekennzeichnet, dass** die Spannvorrichtung (1) außerdem einen Zapfen (41) enthält, der durch die beiden Enden (11, 12) des Spannrings (10) hindurchführt und dabei auf die Kippachse (Y20) zentriert ist, der um die Kippachse drehbar mit dem Hebel (20) verbunden ist und der, axial entgegengesetzt bezogen auf die Kippachse, drehbar verbunden ist, mit einem Kopf (43) und einem Gewinde (44) auf das eine Mutter (42) geschraubt ist, so dass die beiden Enden des Spannrings, der Hebel und das Nockensystem (30) entsprechend der Kippachse, zwischen dem Kopf und der Mutter eingespannt sind;

und dadurch, dass die Mutter (42) eine Auflagefläche (42A) beinhaltet, die entsprechend der Kippachse (Y20), gegen eine Rastfläche (24B) des Hebels (20) gedrückt wird, wobei sie mit dieser Rastfläche zusammenwirkt, insbesondere formschlüssig, um so die Drehung der Mutter um die Kippachse bezogen auf den Hebel in verschiedenen Einrastpositionen zu blockieren, der Übergang der Mutter zwischen zwei dieser Einrastpositionen ist durch einen axialen Abstand zwischen der Auflagefläche und der Rastfläche gesteuert.

12. Spannvorrichtung nach Anspruch 11, **dadurch gekennzeichnet, dass** entweder die Auflagefläche (42A) oder die Rastfläche (24B) mit mehreren konkaven Kugelkappen (46) ausgerüstet ist, die um die Kippachse (Y20) verteilt sind, wobei sie mehrere Einrastpositionen definieren und dass die entsprechende andere Fläche mit mindestens einer konvexen Kugelkappe (26) ausgerüstet ist, die selektiv, in komplementärer Weise in einer der konkaven Kugelkappen aufgenommen wird.

13. Spannvorrichtung nach einem der Ansprüche 11 oder 12, **dadurch gekennzeichnet, dass** die Spannvorrichtung (1) außerdem mindestens eine Feder (50) enthält, die, entsprechend der Kippachse (Y20), zwischen den Zapfen (41) und dem Hebel (20) eingesetzt ist, so dass die Auflagefläche (42A) und die Rastfläche (24B) entsprechend der Kippachse gegeneinander gedrückt werden.

14. Spannvorrichtung nach einem beliebigen der vorangehenden Ansprüche, **dadurch gekennzeichnet, dass** der Spannring (10) robust ausgelegt ist, so dass, auch wenn sich der Hebel (20) in der offenen Position befindet, der Spannring (10) eine elastische Beanspruchung ausübt, die die beiden Enden (11, 12) des Spannrings voneinander entfernt.

15. Spannvorrichtung nach einem beliebigen der vorangehenden Ansprüche, **dadurch gekennzeichnet, dass** die Nockenfläche (33, 34) jedes Paares des Nockensystems (30) aus einem thermoplastischen Material hergestellt wird, insbesondere Polyacetal oder PBT.

## Claims

1. Clamping device (1), in particular for clamping a saddle for a bicycle, comprising:

   - a clamp (10) which defines a central axis (X10) and is intended for substantially coaxially enclosing a part to be clamped (2), in particular a saddle post tube which is open in such a way that it has two ends (11, 12) which can be brought closer together to enclose the part to be clamped, and
   - a lever (20), which is mounted to pivot on the ends (11, 12) of the clamp (10) about a pivoting axis (Y20) extending substantially perpendicularly to the central axis (X10), and which is connected to the clamp by a cam system (30) operable by pivoting the lever about the pivoting axis between an open position, in which the clamp is released, and a closed position, in which the clamp is tightened;

   wherein the cam system (30) includes at least one pair of cam parts associating a cam surface (33, 34) and a cam follower surface (25, 26), which are each generally helical by wrapping around the pivoting axis (Y20) and which are respectively rotationally linked to each other about the pivoting axis of the clamp (10) and the lever (20);
   wherein the cam surface (33, 34) of the or each pair of cam parts in the cam system (30) comprises:

   - a first surface portion (33.1) against which the associated cam follower surface (25, 26) is pressed along the pivoting axis (Y20) both when the lever (20) is in the open position and when the lever is tilted from the open position to the closed position, and
   - a second surface portion (33.2), which is connected to the first surface portion (33.1) by a third surface portion (33.3) of the cam surface, and against which the associated cam follower surface is pressed along the pivoting axis both when the lever is in the closed position and when the lever is tilted from the closed position to the open position;

   wherein the cam follower surface (25, 26) of the or each pair of cam parts in the cam system (30) comprises a main part (25.1, 26.1), which is helical, centred on the pivoting axis (Y20) and having a constant pitch, and which is pressed along the pivoting axis against the second surface portion (33.2) of the associated cam surface (33, 34) when the lever is in the closed position;
   wherein the second portion of surface (33.2) of cam surface (33, 34) of the or each pair of cam parts in the cam system (30) has a pitch which is substantially equal to the constant pitch of the main part (25.1, 26.1) of the associated cam follower surface (25, 26); and
   wherein the cam surface (33, 34) of the or each pair of cam parts in the cam system (30) defines a bearing helix (33A) to which bearing stresses between the cam surface and the associated cam follower surface (25, 26) apply, which bearing helix winds around the pivoting axis (Y20) extending at least partially over the first (33.1) and second (33.2) surface portions of the cam surface,
   **characterized in that** (33A) of the cam surface (33, 34) of the or each pair of the cam system (30) has a helix angle ($\beta_{33A}$), measured with respect to a plane perpendicular to the pivoting axis (Y20), which is larger on the first surface portion (33.1) of the cam surface than on the second portion (33.2) of the cam surface.

2. A clamping device according to claim 1, **characterized in that** the cam surface (33, 34) of the or each pair of cam parts in the cam system (30) is curved to form a ridge (33A) concentrating the bearing stresses between the cam surface and the associated cam follower surface (25, 26), said ridge forming a bearing helix.

3. A clamping device according to claim 1, **characterized in that** the cam surface of the or each pair of cam parts in the cam system has, sectionally in any axial plane containing the pivoting axis (Y20) and intersecting the cam surface, a rectilinear profile, and **in that** the bearing helix corresponds to a geometrical helix which is centred on the pivoting axis (Y20) and which, in section in any axial plane containing the pivoting axis (Y20) and intersecting the cam surface, has a radius (req) which is equal to 2/3, where (rext$^3$-rint$^3$)/(rext$^2$-rint$^2$) or rext and rint are the radii respectively outside and inside the cam surface, measured in said axial plane.

4. A clamping device according to any of the preceding claims, **characterized in that** the cam surface (33, 34) of the or each pair of cam parts in the cam system (30) has a greater pitch on the first surface portion (33.1) of the cam surface than on the second surface portion (33.2) of the cam surface.

5. A clamping device according to any one of the preceding claims, **characterized in that** the supporting helix (33A) of the cam surface (33, 34) of the or each pair of cam parts in the cam system (30) has a radius, measured in relation to the pivoting axis (Y20), which is smaller in the first surface portion (33.1) of the cam surface than on the second surface portion (33.2) of the cam surface.

6. A clamping device according to any of the preceding claims, **characterized in that** the helix angle (β33A) of the supporting helix (33A) of the cam surface (33, 34) of the or each pair of cam parts in of the cam system (30) is:

- greater than 13° or even greater than 14° over substantially the entire first surface portion (33.1) of the cam surface, and
- less than 6° or even less than 5° over substantially the entire second surface portion (33.2) of the cam surface.

7. A clamping device according to any of the preceding claims, **characterized in that** the second portion of the surface (33.2) of the cam surface (33, 34) of the or each pair of cam parts in the cam system (30) is congruent to the associated cam follower surface (25, 26).

8. A clamping device according to any of the preceding claims, **characterized in that** the cam surface (33, 34) of the or of each pair of cam parts in the cam system (30) also comprises a fourth surface portion (33.4) which extends from the second surface portion (33.2) opposite the third surface portion (33.3), while being connected to the second surface portion continuously, and **in that** the pitch of the cam surface (33, 34) of the or each pair of cam parts in the cam system (30) is larger in the fourth surface portion (33.4) of the cam surface than on the second surface portion (33.2).

9. A clamping device according to any of the preceding claims, **characterized in that** the cam system (30) comprises:

- two pairs of cam parts whose respective cam surfaces (33, 34) are symmetrical to each other with respect to the pivoting axis, and/or
- two pairs of cam parts whose respective cam surfaces (33, 34) are arranged respectively on either side, along the pivoting axis (Y20), of the two ends (11, 12) of the clamping collar (10).

10. A clamping device according to any of the preceding claims, **characterized in that** the cam system (30) comprises at least one cam part (31, 32):

- which differs from the clamp (10) and the lever (20), **in that** it is interposed along the pivoting axis (Y20), between the lever and one of the ends (11, 12) of the clamping collar,
- which, for each pair of cam parts in the cam system, borders on a first face (31A, 32A) of the cam part, either the corresponding cam surface (33, 34) or the corresponding cam follower surface (25, 26), and
- which, on a second side (31B, 32B) of the cam part opposite the first side along the pivoting axis (Y20), has a cylindrical surface (35, 36) centred on a pivoting axis (X35, X36) parallel to the central axis (X10) and intersecting the pivoting axis (Y20), and which cooperates in a complementary manner with a cylindrical surface (15, 16) of the clamping collar (10) so that the cam part is both rotationally linked about the pivoting axis to the clamping collar and is supported along the pivoting axis against the clamping collar, while allowing pivotal deflection about the pivoting axis.

11. A clamping device according to any of the preceding claims, **characterized in that** the clamping device (1) also comprises a trunnion (41), which passes through both ends (11, 12) of the clamping collar (10) while being centred on the pivoting axis (Y20), which is rotationally linked around the pivoting axis to the lever (20), and which is provided, axially opposite in the direction of the pivoting axis, with a head (43) and a thread (44) to which a nut (42) is screwed, so that the two ends of the clamping collar, the lever and the cam system (30) are clamped between the head and the nut in the direction of the pivoting axis, and **in that** the nut (42) includes a bearing face (42A) supported along the pivoting axis (Y20) against an indexing face (24B) of the lever (20), while cooperating with this indexing face, in particular by complementary shapes, so as to block the rotation of the nut about the pivoting axis with respect to the lever in a plurality of indexed positions, with the passage of the nut between two of these indexed positions being controlled by axial spacing between the bearing face and the indexing face.

12. A clamping device according to claim 11, **characterized in that** one of the bearing faces (42A) and the indexing faces (24B) has a plurality of concave spherical caps (46), set out around the pivoting axis (Y20) defining the plurality of indexed positions, and **in that** the other support face and indexing face has at least one convex spherical cap (26) which is selectively and additionally accommodated in one of the concave spherical caps.

13. A clamping device according to one of claims 11 or 12, **characterized in that** the clamping device (1) also comprises at least one spring (50) interposed, along the pivoting axis (Y20), between the trunnion (41) and the lever (20) so as to press the bearing face (42A) and the indexing face (24B) against each other along the pivoting axis.

14. A clamping device according to any of the preceding claims, **characterized in that** the clamping collar (10) is made resilient so that, when the lever (20) is in the open position, the clamping collar (10) exerts a constraining force which spreads the two ends (11, 12) of the clamp apart.

15. A clamping device according to any of the preceding claims, **characterized in that** the second portion of the of the cam surface (33, 34) of the or each pair of cam parts in the cam system (30) is made of a thermoplastic material, namely polyacetal or PBT.

Fig.1

Fig.2

Fig.3

Fig.4

Fig.5

Fig.6

EP 3 388 252 B1

Fig.7

Fig.8

Fig.9

Fig.10

EP 3 388 252 B1

**Fig.11**

Fig.12

Fig.13

Fig.14

Fig.15

Fig.16

Fig.17

Fig.18

Fig.19

Fig.20

Fig.21

Fig.22

EP 3 388 252 B1

Fig.23

EP 3 388 252 B1

Fig.24

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2927517 A
- WO 2012066215 A
- WO 2007075735 A